# EUROPEAN PATENT SPECIFICATION

(11) **EP 2 883 695 B1**
(45) Date of publication and mention of the grant of the patent: **14.03.2018**
(21) Application number: 13828016.9
(22) Date of filing: 12.04.2013
(51) Int. Cl.: B32B 7/02, B32B 7/06, B32B 7/12, B32B 25/04, B32B 25/16, B32B 25/18, B61D 17/10, C08K 3/22, C08K 3/00, C09J 7/02

(54) **FLOOR SHEET FOR VEHICLE, FLOOR STRUCTURAL BODY FOR VEHICLE, AND METHOD FOR CONSTRUCTING FLOOR STRUCTURAL BODY FOR VEHICLE**
BODENBELAG FÜR EIN FAHRZEUG, BODENBAUTEIL FÜR EIN FAHRZEUG UND VERFAHREN ZUR HERSTELLUNG DES BODENBAUTEILS FÜR EIN FAHRZEUG
FEUILLE DE PLANCHER POUR VÉHICULE, CORPS STRUCTUREL DE PLANCHER POUR VÉHICULE, ET PROCÉDÉ POUR CONSTRUIRE UN CORPS STRUCTUREL DE PLANCHER POUR VÉHICULE

(30) Priority: 08.08.2012 JP 2012176544
(43) Date of publication of application: 17.06.2015
(73) Proprietor: Bando Chemical Industries, Ltd., Kobe-shi, Hyogo 650-0047 (JP)
(72) Inventor: NAKASHIMA Hisayuki, Kobe-shi Hyogo 650-0047 (JP)
(74) Representative: dompatent von Kreisler Selting Werner - Partnerschaft von Patent- und Rechtsanwälten mbB
(86) International application number: PCT/JP2013/061071
(87) International publication number: WO 2014/024523

(56) References cited:
- WO-A1-2005/083024
- WO-A1-2012/132520
- WO-A2-01/76867
- JP-A- H07 276 589
- JP-A- 2001 295 454
- JP-A- 2003 328 546
- JP-A- 2006 161 303
- JP-A- 2009 184 184
- JP-A- 2009 184 184
- JP-A- 2011 256 360

## Description

### [TECHNICAL FIELD]

The present invention relates to a floor sheet for vehicles, a floor structure of a vehicle, and a method for constructing a floor structure of a vehicle.

### [BACKGROUND ART]

As the floor sheet for vehicles, for example, floor sheets for railway vehicles to be laid on the floor face of vehicles for use on railways have been known. The floor sheets for railway vehicles are laid through adhesion to the floor face of the vehicle via an adhesive. In this respect, a common laying method of the floor sheet for railway vehicles includes: first, spray-coating a solvent borne adhesive on each of the floor face of the vehicle, and the back face of the floor sheet; drying the adhesive to some extent; and then attaching the floor sheet to the floor face.

However, according to this laying method, adverse effects by volatilization of the solvent of a solvent borne adhesive to workers are concerned; therefore, it is necessary to pay attention to secure ventilation, etc., in the working place. Furthermore, it is necessary to coat the adhesive on two faces, i.e., the floor face of the vehicle, and the back face of the floor sheet for vehicles, and thus when the curing speed of the adhesive is high in particular, completion of the coating of the adhesive onto the two faces within a short period of time is required. Moreover, it is necessary to mask the area on which the adhesive should not be applied (for example, seats, etc.) in the spray coating such that the area is prevented from coating. Accordingly, the floor sheet for vehicles involves problems of complicated working properties of the operation for construction of the same, leading to inferior applicability.

In addition, when the floor sheet for vehicles which had been laid as described above must be detached, there arises a problem of difficulty and complexity of the detachment manipulation of the floor sheet, due to a strong adhesive force of the floor sheet.

In view of these problems, a floor sheet for vehicles was also proposed including: a tacky layer provided on one face of a sheet base material; and a release layer provided on one face of the tacky layer (Japanese Unexamined Patent Application, Publication No. 2009-184184).

The above Publication discloses that the tacky layer of the floor sheet for vehicles is constituted with a nonvulcanizable butyl rubber composition containing a flame retardant polybutene and a butyl rubber, whereby an improvement of detachability of the floor sheet for vehicles is intended. In this regard, an exemplary thickness of the tacky layer is 0.5 to 2.0 mm; however, when the tacky layer constituted with the nonvulcanizable butyl rubber composition has a thickness of 0.5 mm, it has been proven that the floor sheet may fail to have a sufficient strength (cohesive force) for use as the floor sheet for railway vehicles. Thus, it would have been necessary to increase the thickness of the tacky layer in order to attain the sufficient strength, but the increase in the thickness of the tacky layer will cause problems in terms of the production cost, and the like. More specifically, the increase in the thickness of the tacky layer results in an increase in the amount of the nonvulcanizable butyl rubber composition used, leading to the increase in the production cost. In addition, for example, the floor sheet for railway vehicles is a sheet element typically having a length of no less than 20 m and less than 30 m, and a thickness of no less than 2 mm and less than 6 mm. Such a sheet element would be rolled up along the longitudinal direction to give a scroll, which is to be stored and transported in this state. Therefore, the increased thickness of the tacky layer as described above may cause problems of difficulties in the storage and transportation due to increasing mass and volume of the floor sheet for vehicles. Moreover, since the nonvulcanizable butyl rubber composition does not cause crosslinking therein, problems of inferior long-term storability as a commercially available product, such as thermal storability, high-temperature storability and high-humidity storability are involved unless any countermeasure is taken to deal with this disadvantage. Furthermore it is known form WO 01/76867 A2 to use an adhesive sheet comprising a base layer, a protective layer disposed on the front surface of the base layer, and an adhesive layer disposed on the back surface of the base layer, particularly as a flooring adhesive sheet, for the purpose of decorating or protecting the floor surface of buildings.

### [PRIOR ART DOCUMENTS]

### [PATENT DOCUMENTS]

Patent Document 1: Japanese Unexamined Patent Application, Publication No. 2009-184184

### [SUMMARY OF THE INVENTION]

### [PROBLEMS TO BE SOLVED BY THE INVENTION]

The present invention was made in view of the foregoing problems, and an object of the invention is to provide a floor sheet for vehicles that enables a laying operation to be easily carried out, has superior detachability when a detachment manipulation is required, and also has superior handleability and durability. Furthermore provided by the present invention include: a floor structure of a vehicle; and a method for constructing a floor structure of a vehicle.

### [MEANS FOR SOLVING THE PROBLEMS]

According to an aspect of the invention made for solving the aforementioned problems,
a floor sheet for vehicles to be laid on a floor face of a vehicle includes:
a floor sheet main body made of a flame retardant rubber and formed to have a long-sheet shape and to have a thickness of no less than 1 mm and less than 7 mm; and
a tacky layer made of an acrylic tacky material and overlaid directly or indirectly on a back face of the floor sheet main body so as to have a thickness of no less than 50 µm and less than 400 µm and that the acrylic tacky material comprises a hardening agent.

The floor sheet for vehicles can be laid through pasting onto the floor face of a vehicle via the tacky layer provided directly or indirectly on the back face of the floor sheet main body. Thus, as compared with the case where a conventional solvent borne adhesive is used, the laying operation can be more easily and rapidly carried out. Further, even in a case where detachment of the floor sheet is required, the detachment manipulation can be easily and certainly carried out since the floor sheet is overlaid on the floor face via the tacky layer.

Furthermore, since the tacky layer is made of the acrylic tacky material, the floor sheet can be laid on the floor face with a sufficient strength (cohesive force) even though the thickness of the tacky layer is no less than 50 µm and less than 400 µm. Since the tacky layer thus has the thickness described above, the product cost can be reduced, and the total weight can be minimized, leading to an improvement of the handleability. In addition, since the tacky layer is made of the acrylic tacky material, an advantage of superior durability can be achieved, as compared with the tacky layer constituted with a conventional nonvulcanizable butyl rubber composition.

Moreover, in the floor sheet for vehicles, it is preferred that: the floor sheet main body is formed from a flame retardant rubber composition; the flame retardant rubber composition contains a rubber component and an inorganic fire retardant; and the inorganic fire retardant is contained in an amount of no less than 50 parts by weight and less than 90 parts by weight with respect to 100 parts by weight of the rubber component. Accordingly, flame retardancy can be improved while maintaining rubber performances of the floor sheet main body.

The inorganic fire retardant as referred to herein means an inorganic compound used for imparting flame retardancy to the floor sheet for vehicles. The inorganic fire retardant is particularly preferably aluminum hydroxide and/or antimony trioxide, whereby a smoke-emitting property of the floor sheet for vehicles can be suppressed.

Additionally, in a floor sheet for vehicles which does not form part of the present invention, a cohesive force of the tacky layer is preferably no less than 20 N/25 mm and less than 100 N/25 mm. Accordingly, it is advantageous in that a sufficient strength can be attained in the state being laid, whereas the detachment manipulation can be easily carried out when the detachment is required. As used herein, the cohesive force means a peel strength of bonded assemblies as determined by: pasting the floor sheet for vehicles on a stainless steel material; and then measuring in accordance with a test method defined in JIS K6854-1 "Adhesives-Determination of peel strength of bonded assemblies, Part 1: 90° peel" at a peeling speed of 50 mm/min.

Furthermore, in the floor sheet for vehicles, the amount of the tacky layer overlaid is preferably no less than 50 g/m² and no greater than 175 g/m². When the amount of the tacky layer overlaid thus falls within the above range, the floor sheet for vehicles can have a sufficient adhesive force for: preventing the detachment even when passengers, etc., have stayed and moved thereon; and concurrently preventing detachment at R portions (rising portion), when the floor sheet for vehicles is pasted so as to cover from the floor face over the side walls of the vehicle.

Still further, in the floor sheet for vehicles, it is preferred that the tacky layer has: at 10 Hz and 40 °C, a shear storage modulus at 10 Hz and 40 °C of no less than 6.4 x 10⁴ Pa and no greater than 2.2 x 10⁵ Pa and a loss tangent of no less than 0.35 and no greater than 0.95; or at 10 Hz and 60 °C, a shear storage modulus of no less than 4.9 x 10⁴ Pa and no greater than 1.4 x 10⁵ Pa and a loss tangent of no less than 0.40 and no greater than 0.85. When the tacky layer thus has a shear storage modulus and a loss tangent falling within the above range, the floor sheet for vehicles can have superior cohesive force and durability in environments in which the floor sheet is supposed to be used in the vehicles.

Additionally, the floor sheet for vehicles preferably includes a release layer overlaid on the back face of the tacky layer. When the release layer is thus provided on the back face of the tacky layer (a face on the opposite side with respect to the floor sheet main body), handleability is improved, and the laying operation can be readily carried out by peeling off the release layer in the laying operation.

It is preferred that the release layer has an elongation percentage at break of no less than 10%, and an elastic recovery percentage of elongation of no less than 50%. Thus, the floor sheet for vehicles is advantageous in that even when it is rolled up, generation of wrinkles and break of the release layer, as well as gaps between the release layer and the tacky layer, and the like can be prohibited. It is to be noted that the elongation percentage at break is a value as determined in accordance with JIS K6251. Further, the elastic recovery percentage of elongation is a value as determined in accordance with JIS L1096.

In addition, according to another aspect of the present invention made for solving the aforementioned problems,
a floor structure of a vehicle includes
a floor sheet for vehicles including:
a floor sheet main body made of a flame retardant rubber and formed to have a long-sheet shape and to have a thickness of no less than 1 mm and less than 7 mm; and
a tacky layer made of an acrylic tacky material overlaid directly or indirectly on the back face of the floor sheet main body so as to have a thickness of no less than 50 µm and less than 400 µm and that the acrylic tacky material comprises a hardening agent, and
a floor material of the vehicle on which the floor sheet for vehicles is overlaid on the top face thereof.

Due to the tacky layer provided directly or indirectly on the back face of the floor sheet main body, the floor structure of a vehicle can be laid through pasting onto the floor face of the vehicle, and thus the laying operation can be easily and rapidly carried out as compared with a case where a conventional solvent borne adhesive is used. In addition, even if the detachment is required, the detachment manipulation can be also easily and certainly carried out since the floor sheet is overlaid on the floor face via the tacky layer.

In addition, since the tacky layer is made of an acrylic tacky material, even if the tacky layer has a thickness of no less than 50 µm and less than 400 µm, the floor sheet can be laid on the floor face with a sufficient strength (cohesive force). Since the tacky layer thus has the thickness described above, the product cost of the floor sheet for vehicles can be reduced, and the total weight of the floor sheet for vehicles can be minimized, leading to an improvement of the handleability. Furthermore, since the tacky layer is made of an acrylic tacky material, an advantage of superior durability can be achieved, as compared with the tacky layer constituted with a conventional nonvulcanizable butyl rubber composition.

Still further, according to other aspect of the present invention made for solving the aforementioned problems,
a method for constructing a floor structure of a vehicle including the steps of:
peeling off a release layer from a floor sheet for vehicles including:
   a floor sheet main body made of a flame retardant rubber and formed to have a long-sheet shape and to have a thickness of no less than 1 mm and less than 7 mm;
   a tacky layer made of an acrylic tacky material overlaid directly or indirectly on the back face of the floor sheet main body so as to have a thickness of no less than 50 µm and less than 400 µm and that the acrylic tacky material comprises a hardening agent; and
   a release layer overlaid on the back face of the tacky layer with respect to the floor sheet main body, and attaching the tacky layer exposed through peeling off the release layer, to a floor face of the vehicle.

According to the method for constructing a floor structure of a vehicle, the tacky layer provided directly or indirectly on the back face of the floor sheet main body enables the floor sheet to be laid through pasting onto the floor face of the vehicle, as compared with a case where a conventional solvent borne adhesive is used, the laying operation can be easily and rapidly carried out. Since the release layer is overlaid on the back face of the tacky layer before the construction in particular, the handleability of the floor sheet for vehicles is superior, and the construction operation can be easily carried out through peeling off the release layer, thereby also leading to superior working property of the construction operation. Furthermore, in a case where the floor sheet for vehicles is required to be detached from the floor structure constructed according to the construction method, the detachment manipulation can be also carried out easily and certainly since the floor sheet for vehicles is laid on the floor face via the tacky layer.

In addition, since the tacky layer is made of an acrylic tacky material, the floor sheet can be laid on the floor face with a sufficient strength (cohesive force), even when the thickness is no less than 50 µm and less than 400 µm. Since the tacky layer thus has the thickness described above, the product cost of the floor sheet for vehicles can be reduced, and the total weight of the floor sheet for vehicles can be minimized, leading to an improvement of the handleability. Furthermore, since the tacky layer is made of an acrylic tacky material, an advantage of superior durability can be achieved, as compared with the tacky layer constituted with a conventional nonvulcanizable butyl rubber composition.

It is to be noted that the "thickness" as referred to herein means an average thickness determined in accordance with JIS K7130. The term "amount overlaid" as referred to means a dry weight per unit area. The term "shear storage modulus" as referred to means a value determined using a viscoelastic spectrometer, whereas a "loss tangent" as referred to means a ratio of the loss elastic modulus to the shear storage modulus under a condition involving the same frequency and the same temperature.

### [EFFECTS OF THE INVENTION]

According to the aspects of the present invention, a laying operation of a floor sheet for vehicles can be easily carried out, and when a detachment manipulation of the floor sheet for vehicles is required, the detachment manipulation can be also easily carried out, with exhibiting superior handleability and durability of the floor sheet for vehicles.

### [BRIEF DESCRIPTION OF THE DRAWINGS]

FIG. 1 shows an enlarged cross sectional view of a substantial part schematically illustrating a floor sheet for railway vehicles according to a first embodiment of the present invention;
FIG. 2 shows a bottom view schematically illustrating the floor sheet for railway vehicles shown in FIG.;
FIG. 3 shows explanatory views schematically illustrating an application method of the floor sheet for railway vehicles according to the first embodiment of the present invention; FIG. 3 (A) shows an enlarged cross sectional view of a substantial part illustrating a state in which a portion of the release layer is eliminated; and FIG. 3(B) shows an enlarged cross sectional view of a substantial part illustrating a state in which other portion of the release layer is attached;
FIG. 4 shows an enlarged cross sectional view of a substantial part schematically illustrating a floor structure of a railway vehicle according to the first embodiment of the present invention;
FIG. 5 shows explanatory views schematically illustrating a production method of the floor sheet for railway vehicles according to the first embodiment of the present invention; FIG. 5 (A) shows an enlarged cross sectional view of a substantial part illustrating a state in which a tacky layer and a release layer are provided; and FIG. 5 (B) shows a schematic explanatory view illustrating a summary of the production method;

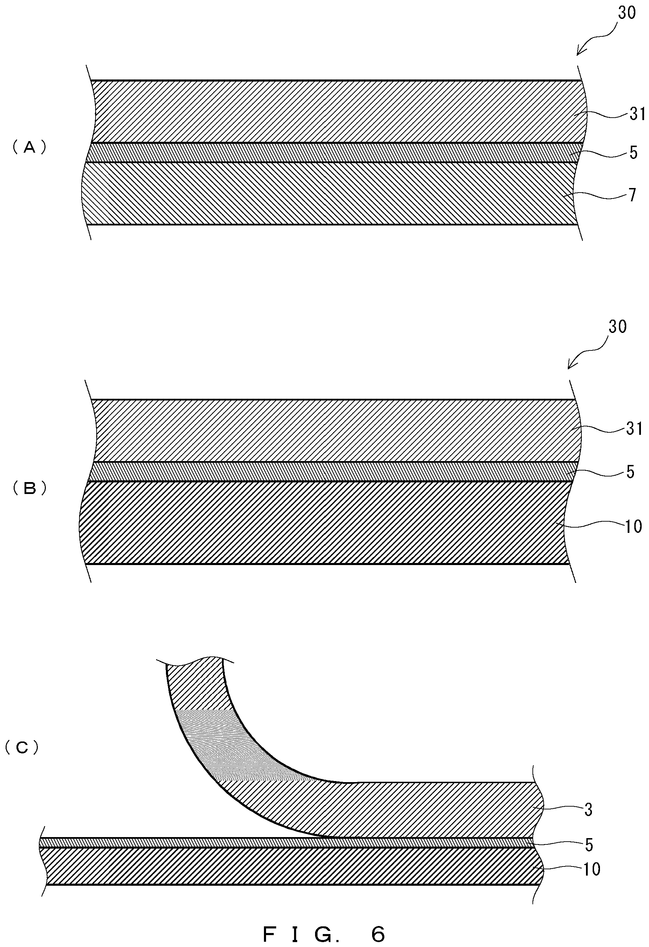

FIG. 6 shows enlarged cross sectional views of a substantial part schematically illustrating a construction method of a floor structure of a railway vehicle according to another embodiment of the present invention; Fig. 6 (A) shows an enlarged cross sectional view of a substantial part illustrating a tacky sheet for floor faces of vehicles used in the method; FIG. 6 (B) shows an an enlarged cross sectional view of a substantial part illustrating a state in which the tacky sheet for floor faces of vehicles is attached on the floor face; and FIG. 6 (C) shows an enlarged cross sectional view of a substantial part illustrating a state in which a floor sheet main body is attached on the tacky sheet for floor faces of vehicles; and
FIG. 7 shows explanatory views schematically illustrating a floor sheet for railway vehicles according to a still another embodiment of the present invention; FIG. 7 (A) shows a bottom view; and FIG. 7 (B) shows an enlarged cross sectional view of a substantial part.

### [DESCRIPTION OF EMBODIMENTS]

### First Embodiment

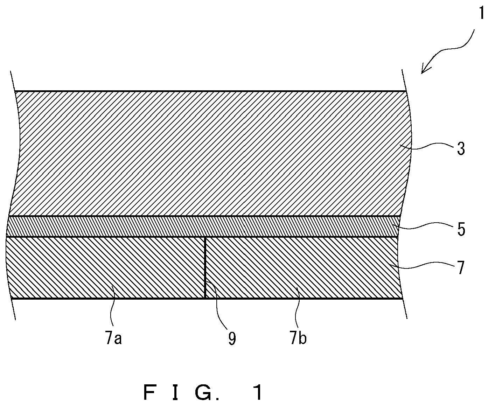

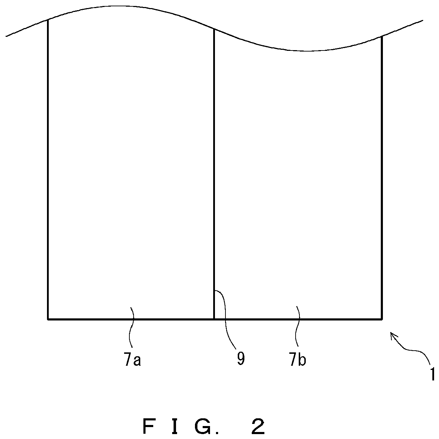

Hereinafter, preferred modes for carrying out the present invention will be explained with references to the drawings. As a first embodiment of the floor sheet for vehicles according to the present invention, a floor sheet for railway vehicles (hereinafter, may be merely referred to as "floor sheet") to be laid on a floor face of railway vehicles will be first explained with reference to FIGs. 1 and 2.

### Floor Sheet 1

The floor sheet 1 shown in FIGs. 1 and 2 includes: a floor sheet main body 3 formed to have a long-sheet shape; a tacky layer 5 provided directly or indirectly on the back face of the floor sheet main body 3; and a release sheet 7 (release layer) provided on the back face of the tacky layer 5. The floor sheet 1 wound around a core material, etc., along the longitudinal direction to give a form of a roll, which is then stored and/or transported in the roll form. It is to be noted that the floor sheet 1 is wound such that the release sheet 7 is located on an outer side.

### Floor Sheet Main Body 3

The floor sheet main body 3 is made from a flame retardant rubber composition. The flame retardant rubber composition is obtained by vulcanizing one, or two or more types of rubber component(s). It is preferred that the flame retardant rubber composition contains an inorganic fire retardant in addition to the rubber component(s). It is to be noted that a rubber component which had been vulcanized beforehand may be used as the rubber component. In addition, for example, a styrene-butadiene rubber or the like may be employed as the rubber component. In these regards, although a weight ratio of styrene/ butadiene is not particularly limited, the weight ratio is preferably no less than 23.5 and less than 46. When the weight ratio falls within this range, the processing can be easily carried out with a usual rubber processing equipment.

The inorganic fire retardant contained in the flame retardant rubber composition is contained in an amount of preferably no less than 50 parts by weight, more preferably no less than 55 parts by weight, and still more preferably no less than 60 parts by weight with respect to 100 parts by weight of the rubber component(s) contained in the flame retardant rubber composition. Whereas, the inorganic fire retardant is contained in an amount of preferably less than 90 parts by weight, more preferably less than 80 parts by weight, and still more preferably less than 70 parts by weight with respect to 100 parts by weight of the rubber component(s) contained in the flame retardant rubber composition. When the content of the inorganic fire retardant is no less than the lower limit described above, the flame retardancy of the floor sheet 1 is improved. Whereas, when the content is less than the upper limit described above, deterioration of the rubber characteristics of the floor sheet 1 can be inhibited.

As the inorganic fire retardant to be contained in the flame retardant rubber composition, any of a variety of types of inorganic fire retardants may be employed, but in light of suppressing the smoke-emitting property, aluminum hydroxide, antimony trioxide or a combination thereof is preferred. Still further, in light of an improvement of the flame retardancy such as suppression of the smoke-emitting property, the flame retardant rubber composition for forming the floor sheet main body 3 preferably contains in addition to the aluminum hydroxide and antimony trioxide, a chlorinated paraffin as a fire retardant other than inorganic fire retardants.

The aluminum hydroxide is contained in an amount of preferably no less than 70 parts by weight, more preferably no less than 75 parts by weight, and still more preferably no less than 78 parts by weight with respect to 100 parts by weight of the rubber component(s) contained in the flame retardant rubber composition. Whereas, the aluminum hydroxide is contained in an amount of preferably less than 88 parts by weight, more preferably less than 85 parts by weight, and still more preferably less than 82 parts by weight with respect to 100 parts by weight of the rubber component(s) contained in the flame retardant rubber composition. When the content of the aluminum hydroxide is no less than the lower limit described above, the amount of smoke emitted can be reduced, leading to an improvement of the flame retardancy of the floor sheet 1, whereas when the content is less than the upper limit described above, deterioration of the rubber characteristics can be inhibited.

The antimony trioxide is contained in an amount of preferably no less than 2 parts by weight, more preferably no less than 3 parts by weight, and still more preferably no less than 4 parts by weight with respect to 100 parts by weight of the rubber component(s) contained in the flame retardant rubber composition. Whereas, the antimony trioxide is contained in an amount of preferably less than 8 parts by weight, more preferably less than 7 parts by weight, and still more preferably less than 6 parts by weight with respect to 100 parts by weight of the rubber component(s) contained in the flame retardant rubber composition. When the content of the aluminum hydroxide is no less than the lower limit described above, the flame retardancy of the floor sheet 1 is improved, whereas when the content is less than the upper limit described above, deterioration of the rubber characteristics can be inhibited.

Furthermore, the chlorinated paraffin is contained in an amount of preferably no less than 0.5 parts by weight, more preferably no less than 1 part by weight, and still more preferably no less than 1.5 parts by weight with respect to 100 parts by weight of the rubber component(s) contained in the flame retardant rubber composition. Whereas, the chlorinated paraffin is contained in an amount of preferably less than 15 parts by weight, more preferably less than 10 parts by weight, and still more preferably less than 9 parts by weight with respect to 100 parts by weight of the rubber component(s) contained in the flame retardant rubber composition. When the content of the aluminum hydroxide is no less than the lower limit described above, the flame retardancy of the floor sheet 1 is improved, whereas when the content is less than the upper limit described above, toxicity of the combustion gas generated upon combustion can be reduced.

Although the number of carbon atoms, and the degree of chlorination of the chlorinated paraffin are not particularly limited, the number of carbon atoms is preferably no less than 12 and less than 26. Also, the degree of chlorination represented by the percentage of the amount of chlorine atoms occupying in the molecular weight of the chlorinated paraffin is preferably no less than 40% and less than 70%, in light of the flame retardancy imparted.

It is to be noted that the flame retardant rubber composition for forming the floor sheet main body 3 may also contain clay, calcium carbonate, zinc oxide, titanium oxide, etc., in addition to the aforementioned fire retardant.

The thickness of the floor sheet main body 3 is preferably no less than 2 mm, and more preferably no less than 3 mm. Whereas, the thickness of the floor sheet main body 3 is preferably less than 6 mm, and more preferably less than 5 mm. When the thickness of the floor sheet main body 3 is no less than the lower limit described above, desired rubber characteristics such as shock-absorbing properties can be exhibited in the state being laid. Whereas, when the thickness is less than the upper limit described above, the handleability is improved. It is to be noted that the "thickness" as referred to means an average thickness as determined in accordance with JIS K7130. Specifically, the average thickness means an average of measurements of the thickness measured using a thickness gauge at ten points equally spaced along the width direction of the floor sheet main body 3. Note that the same applies to the thickness of the tacky layer 5, etc., as described later.

In addition, although the length of the floor sheet main body 3 is not particularly limited, it is preferred that the floor sheet main body 3 has such a length as enabling the whole area of the floor face of the railway vehicle to be covered along the longitudinal direction with one floor sheet 1. Specifically, the length of the floor sheet main body 3 is preferably no less than 10 m, more preferably no less than 12 m, still more preferably no less than 14 m, and particularly preferably no less than 16 m. Whereas, the length of the floor sheet main body 3 is preferably less than 28 m, more preferably less than 26 m, still more preferably less than 24 m, and particularly preferably less than 22 m.

Moreover, although the width (the length along the crosswise direction) of the floor sheet main body 3 is not particularly limited, it is preferred that the floor sheet main body 3 has such a width as enabling the whole area of the floor face of the railway vehicle to be covered along the width direction with a plurality of pieces (for example, two pieces) of the floor sheet 1. Specifically, the width of the floor sheet main body 3 is preferably no less than 0.8 m, more preferably no less than 1 m, still more preferably no less than 1.2 m, and particularly preferably no less than 1.4 m. Whereas, the length of the floor sheet main body 3 is preferably less than 2.2 m, more preferably less than 2 m, still more preferably less than 1.8 m, and particularly preferably less than 1.6 m.

### Tacky Layer 5

The tacky layer 5 of the floor sheet 1 is overlaid over the entire surface of the back face of the floor sheet main body 3. The tacky layer 5 is constituted with an acrylic tacky material.

The acrylic tacky material contains an acrylic polymer as a principal basic component. The acrylic polymer is exemplified by a homopolymer of a (meth)acrylic acid alkyl ester, or a copolymer of (meth)acrylic acid alkyl esters. The acrylic polymer can be obtained by, for example, vinyl polymerization of a (meth)acrylic acid alkyl ester according to a routine method.

As the (meth)acrylic acid alkyl ester, for example, those having a linear or branched alkyl group having 1 to 18 carbon atoms, preferably 4 to 12 carbon atoms may be suitably used. Specific examples of the (meth)acrylic acid alkyl ester which may be used include butyl (meth)acrylate, isobutyl (meth)acrylate, hexyl (meth)acrylate, 2-ethylhexyl (meth)acrylate, isooctyl (meth)acrylate, isononyl (meth)acrylate, allyl (meth)acrylate, lauryl (meth)acrylate, stearyl (meth)acrylate, and the like. It is to be noted that these (meth)acrylic acid alkyl esters may be used of one type alone, or two or more types thereof may be also used.

In addition, upon polymerization of the acrylic polymer, it is also possible to copolymerize with a monomer for modification in order to improve optical characteristics, as well as physical properties such as heat resistance.

The monomer for modification is exemplified by monoethylenic monomers that are copolymerizable with the (meth)acrylic acid alkyl ester. Specific examples of the monomer which may be employed include (meth)acrylic acid; carboxyl group-containing monomers such as carboxyethyl (meth)acrylate, carboxypentyl (meth)acrylate, itaconic acid, maleic acid, fumaric acid and crotonic acid; acid anhydride monomers such as maleic anhydride and itaconic anhydride; and a caprolactone adduct of (meth)acrylic acid. Further, examples of the monomer for modification which can be employed include hydroxyl group-containing monomers, sulfonic acid group-containing monomers, phosphate group-containing monomers, amide monomers, succinimide monomers, alkylaminoalkyl (meth)acrylate monomers, cyano(meth)acrylate monomers, epoxy group-containing acrylic monomers, and (meth)acrylic acid ester monomers. These monomers for modification may be used of one type alone, or two or more types thereof may be also used.

Further according to the present invention, a hardening agent is added to the acrylic tacky material. The hardening agent is exemplified by isocyanate hardening agent, and the like.

The lower limit of the amount of the hardening agent added with respect to 100 parts by mass of the acrylic tacky material is preferably 0.1 parts by mass, more preferably 1 part by mass, and still more preferably 1.3 parts by mass. Whereas, the upper limit of the amount of the hardening agent added is preferably 5 parts by mass, more preferably 3 parts by mass, and still more preferably 2 parts by mass. When the amount of the hardening agent added is no less than the lower limit described above, an appropriate elasticity can be imparted to the tacky layer 5. Whereas, when the amount of the hardening agent added is less than the upper limit described above, the tacky layer 5 can have a sufficient cohesive force.

Furthermore, it is also possible to incorporate additives such as a plasticizer, an antioxidant, a reinforcing agent, a filler, a defoaming agent and a surfactant to the acrylic tacky material.

The tacky layer 5 is provided so as to have a thickness of no less than 50 µm and less than 400 µm. The thickness of the tacky layer 5 herein is preferably no less than 60 µm, more preferably no less than 70 µm, still more preferably no less than 80 mm, and particularly preferably no less than 90 µm. Whereas, the thickness of the tacky layer 5 is preferably less than 300 µm, more preferably less than 200 µm, and particularly preferably less than 160 µm. Since the thickness of the tacky layer 5 is no less than the lower limit described above, the floor sheet 1 can be laid on the floor face with a sufficient strength (cohesive force). In addition, since the thickness of the tacky layer 5 is less than the upper limit described above, an increase of the product cost resulting from the tacky layer 5 can be prohibited, and the total weight of the floor sheet 1 can be minimized, leading to an improvement of the handleability.

The lower limit of the amount of the tacky layer 5 overlaid is preferably 50 g/m², and more preferably 75 g/m². On the other hand, the upper limit of the amount of the tacky layer 5 overlaid is preferably 175 g/m². When the amount of the tacky layer 5 overlaid is less than the lower limit value described above, the cohesive force and/or the adhesive strength under shear may be impaired. To the contrary, when the amount of the tacky layer 5 overlaid is greater than the upper limit value described above, detachment at R portions (rising portion), when the floor sheet for vehicles is pasted so as to cover from the floor face over the side walls of the vehicle may become likely to occur, and thus rising from the floor material may be caused. It is to be noted that the amount overlaid as referred to herein means a dry weight per unit area.

In an aspect which does not form part of the present invention the tacky layer 5 has a cohesive force of preferably no
less than 20 N/25 mm, more preferably no less than 30 N/25 mm, still more preferably no less than 35 N/25 mm, and particularly preferably no less than 40 N/25 mm. Whereas, the tacky layer 5 has the cohesive force of preferably less than 100 N/25 mm, more preferably less than 80 N/25 mm, and still more preferably less than 60 N/25 mm. When the cohesive force is no less than the lower limit described above, the floor sheet 1 has a sufficient cohesive force in the state being laid, and thus the floor structure can exhibit a sufficient strength. Whereas, the cohesive force being less than the upper limit described above is advantageous in that when the detachment of the floor sheet 1 is required, the power required for the detachment is decreased, whereby the detachment manipulation can be easily carried out. It is to be noted that the cohesive force means a peel strength of bonded assemblies as determined by: pasting the floor sheet 1 on a stainless steel material; and then measuring in accordance with a test method defined in JIS K6854-1 "Adhesives-Determination of peel strength of bonded assemblies, Part 1: 90° peel" at a peeling speed of 50 mm/min.

The lower limit of the shear storage modulus at 10 Hz and 40 °C of the tacky layer 5 is preferably 6.4 x 10⁴ Pa, and more preferably 1.0 x 10⁵ Pa. On the other hand, the upper limit of the shear storage modulus at 10 Hz and 40 °C of the tacky layer 5 is preferably 2.2 x 10⁵ Pa, and more preferably 2.1 x 10⁵ Pa. Whereas, lower limit of the shear storage modulus at 10 Hz and 60 °C of the tacky layer 5 is preferably 4.9 x 10⁴ Pa, and more preferably 9.0 x 10⁴ Pa. On the other hand, the upper limit of the shear storage modulus at 10 Hz and 60 °C of the tacky layer 5 is preferably 1.4 x 10⁵ Pa, and more preferably 1.3 x 10⁵ Pa. When the shear storage modulus at 40 °C or 60 °C and at 10 Hz is less than the lower limit described above, durability of the tacky layer against shearing may be impaired. To the contrary, when the shear storage modulus is greater than the upper limit described above, the tacky layer may be so hard that the cohesive force may be decreased. It is to be noted that the "shear storage modulus" as referred to means a value determined using a viscoelastic spectrometer.

The lower limit of the loss tangent at 10 Hz and 40 °C of the tacky layer 5 is preferably 0.35, and more preferably 0.38. On the other hand, the upper limit of the loss tangent at 10 Hz and 40 °C of the tacky layer 5 is preferably 0.95, and more preferably 0.5. Whereas, the lower limit of the loss tangent at 10 Hz and 60 °C of the tacky layer 5 is preferably 0.40, and more preferably 0.41. On the other hand, the upper limit of the loss tangent at 10 Hz and 60 °C of the tacky layer 5 is preferably 0.85, and more preferably 0.5. When the loss tangent at 40 °C or 60 °C and at 10 Hz is less than the lower limit described above, the absorptivity of the energy decrease, and thus the elasticity may be lowered. To the contrary, when the loss tangent is greater than the upper limit described above, the tacky layer may be likely to shift upon imparting a load. It is to be noted that the "loss tangent" as referred to means a ratio of the loss elastic modulus to the shear storage modulus under a condition involving the same frequency and the same temperature. The loss elastic modulus is a value determined using a viscoelastic spectrometer, similarly to the shear storage modulus.

The shear storage modulus and the loss tangent of the tacky layer 5 can be adjusted by selecting, for example, the amount of the hardening agent added with respect to the acrylic tacky material, the type (component) of the acrylic tacky material, and the like.

### Release Sheet 7

The release sheet 7 is overlaid over the entire surface of the back face of the tacky layer 5. The release sheet 7 has a dividing line 9 for dividing along the longitudinal direction. In this embodiment, one dividing line 9 is provided so as to form release sheet pieces 7a and 7b on the left and light of the dividing line 9, respectively, and thus the release sheet 7 is composed of a pair of the release sheet pieces 7a and 7b on the left and right sides, respectively.

In this regard, the dividing line 9 can be also configured with a cutting-plane line that penetrates through the sheet along the thickness direction, from the top face to the back face. Alternatively, the dividing line 9 can be configured to include a cutting-facilitating line for easily cutting the sheet in dividing along the longitudinal direction upon the peeling off, or the like. The cutting-facilitating line may be configured with, for example, perforations, surface grooves, etc.

As the release sheet 7, any of a variety of types of sheets may be employed, and the release sheet 7 may be composed of, for example, plastic films such as polyethylene terephthalate and polyethylene, as well as paper materials such as creped paper and release paper. However, a polyethylene sheet or a creped paper may be suitably used as the release sheet 7 in light of attaining a greater elongation percentage at break, and elastic recovery percentage of elongation, as described later.

The elongation percentage at break of the release sheet 7 is preferably no less than 10%, more preferably no less than 20%, still more preferably no less than 30%, and particularly preferably no less than 40%. In addition, the elastic recovery percentage of elongation of the release sheet 7 is preferably no less than 50%, more preferably no less than 60%, still more preferably no less than 70%, and particularly preferably no less than 80%. When the elongation percentage at break and the elastic recovery percentage of elongation of the release sheet 7 are no less than each lower limit described above, it is advantageous in that when the floor sheet 1 is stored in a state being wound around a core material, etc., generation of wrinkles and break of the release sheet 7, as well as gaps between the release sheet 7 and the tacky layer 5, and the like can be prohibited. It is to be noted that the elongation percentage at break is a value as determined in accordance with JIS K6251. Further, the elastic recovery percentage of elongation is a value as determined in accordance with JIS L1096.

### Construction Method of Floor Structure

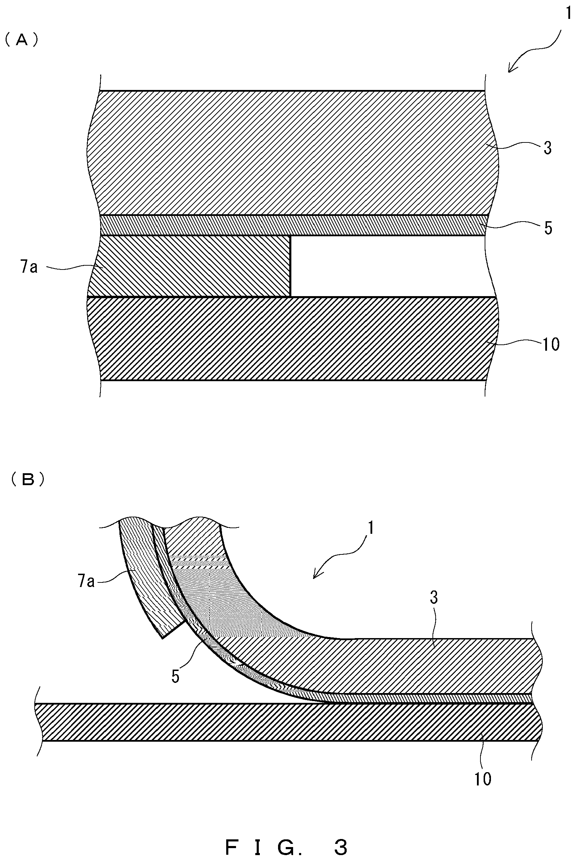

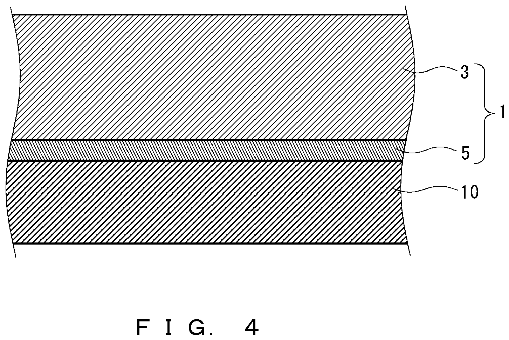

The floor sheet 1 as described above is laid on a floor face of a railway vehicle, and thus a floor structure is constructed. Next, a construction method of the floor structure according to this embodiment will be explained with reference to FIGs. 3 and 4. It is to be noted that a floor material 10 that composes the floor face of a railway vehicle is constituted with a stainless steel material, as well as a urethane type base material, an epoxy type base material, or the like.

The construction method of the floor structure of this embodiment includes: a release sheet-peeling step of peeling off the release sheet 7 from the floor sheet 1; and a attaching step of attaching the tacky layer 5 exposed through peeling off the release sheet 7 so as to attach the tacky layer 5 to the floor face of the railway vehicle.

The construction method of the floor structure of this embodiment includes a floor face-treating step of making the floor face of the railway vehicle have a desired surface roughness, as a pretreatment step of the release sheet-peeling step and the attaching step. In this step, the desired surface roughness (Ra) of the floor face is preferably no less than 1 µm, more preferably no less than 5 µm, still more preferably no less than 10 µm, and particularly preferably no less than 20 µm. In addition, the surface roughness (Ra) is preferably less than 100 µm, more preferably less than 80 µm, still more preferably less than 60 µm, and particularly preferably less than 40 µm. When the floor face has the surface roughness falling within the above range, an appropriate cohesive force between the tacky layer 5 and the floor face can be attained, thereby enabling the floor sheet 1 to be laid in a suitable state. It is to be noted that the surface roughness (Ra) as referred to means an arithmetic average roughness, and is a measurement value determined in accordance with JIS B0601-1994.

Additionally, the construction method of the floor structure of this embodiment includes a placing step of placing the floor sheet 1 on the floor face, as a pretreatment step of the release sheet-peeling step and the attaching step. In the placing step, the wound floor sheet 1 is provided on either the front side or the rear side of the railway vehicle, and the floor sheet 1 is gradually placed while unwinding to spread toward another side of the railway vehicle. It is to be noted that in the state of the floor sheet 1 thus placed, the release sheet 7 is in contact with the floor face of the railway vehicle.

Also, in the laying method of the floor sheet 1 according to this embodiment, the release sheet-peeling step includes: a first peeling step of peeling off one release sheet piece 7b; and a second peeling step of peeling off another release sheet piece 7a. In addition, the attaching step includes: a first attaching step of attaching onto the floor face, a face of the tacky layer 5 exposed through peeling off the one release sheet piece 7b; and a second attaching step of attaching onto the floor face, a face of the tacky layer 5 exposed through peeling off the another release sheet piece 7a.

More specifically, laying method of the floor sheet 1 according to this embodiment includes:
1. the step of placing the floor sheet 1 on the floor face of the railway vehicle such that the release layer is brought into contact with the surface of the floor material 10 (placing step);
2. the step of peeling off the release sheet piece 7b while the release sheet 7 of the floor sheet for railway vehicles 1 thus placed is divided along the dividing line 9 (first peeling step);
3. the step of attaching onto the floor face of the railway vehicle, a part of the tacky layer 5 exposed through peeling off the release sheet piece 7b (first attaching step);
4. the step of peeling off remaining another release sheet piece 7a from the floor sheet 1, a part of the tacky layer 5 of which has been attached on the floor face (second peeling step); and
5. the step of attaching onto the floor face of the railway vehicle, a part of the tacky layer 5 exposed through peeling off the another release sheet piece 7a (second attaching step).

In the first peeling step and the second peeling step, the floor sheet 1 is bent to lift up the side from which either one of the release sheet piece 7a or 7b is to be subsequently peeled off (see, FIG. 3B). In this procedure, particularly in the first peeling step, it is preferred that the release sheet piece 7b is peeled off while the floor sheet 1 corresponding to the other side of the release sheet piece 7b to be peeled off (floor sheet 1 on the side of the release sheet piece 7a) is pushed against the floor face. Accordingly, unwanted displacement of the floor sheet 1 during the peeling manipulation and the attaching manipulation can be prevented. It is to be noted that for such pushing of the floor sheet 1 against the floor face, a pipe for straps may be utilized, which is provided along the longitudinal direction of railway vehicles on the side of the ceiling of for hanging straps of the railway vehicles. Specifically, a tension rod member that is capable of extending/contracting and capable of maintaining the extending/contracting state is provided between the pipe for straps and the floor sheet 1, and then fixing this tension rod member in the extend state, whereby this tension rod member can push the floor sheet 1 against the floor face.

### Floor Structure

The floor structure of this embodiment obtained according to the aforementioned method is composed of the floor material of a railway vehicle 10, and the floor sheet 1 overlaid on the top face (floor face) of the floor material 10 (see, FIG. 4). In this structure, the floor sheet 1 is going to be fixed on the floor face via the tacky layer 5 through tacky adhesion. It is to be noted that with respect to the floor structure, the surface roughness (Ra) of the floor material falls within the above-specified numerical range (i.e., no less than 1 µm and less than 100 µm).

In another aspect which does not form part of the present invention the tacky layer 5 of the floor sheet 1 that composes the floor structure has a cohesive force of preferably no less than 20 N/25 mm, more preferably no less than 30 N/25 mm, still more preferably no less than 35 N/25 mm, and particularly preferably no less than 40 N/25 mm. Whereas, the tacky layer 5 has the cohesive force of preferably less than 100 N/25 mm, more preferably less than 80 N/25 mm, and still more preferably less than 60 N/25 mm. When the cohesive force is no less than the lower limit described above, the floor structure can have a sufficient peel strength. Whereas, the cohesive force being less than the upper limit described above is advantageous in that when the detachment of the floor sheet 1 is required, the power required for the detachment is decreased, whereby the detachment manipulation can be easily carried out. It is to be noted that the cohesive force means a peel strength of bonded assemblies as determined by measuring in accordance with a test method defined in JIS K6854-1 "Adhesives-Determination of peel strength of bonded assemblies, Part 1: 90° peel" at a peeling speed of 50 mm/min.

In addition, the tacky layer 5 has an adhesive strength under shear of preferably no less than 0.15 N/mm², and more preferably no less than 0.20 N/mm². When the adhesive strength under shear of the tacky layer 5 is no less than the lower limit described above, the floor sheet 1 can be prevented from the detachment when passengers, carts, and the like move on the floor structure. It is to be noted that the adhesive strength under shear as referred to means a peel strength of bonded assemblies as determined by measuring in accordance with a test method defined in JIS K6854-1 "Adhesives-Determination of peel strength of bonded assemblies, Part 2: 180° peel" at a peeling speed of 2 mm/min. Production Method of Floor Sheet 1

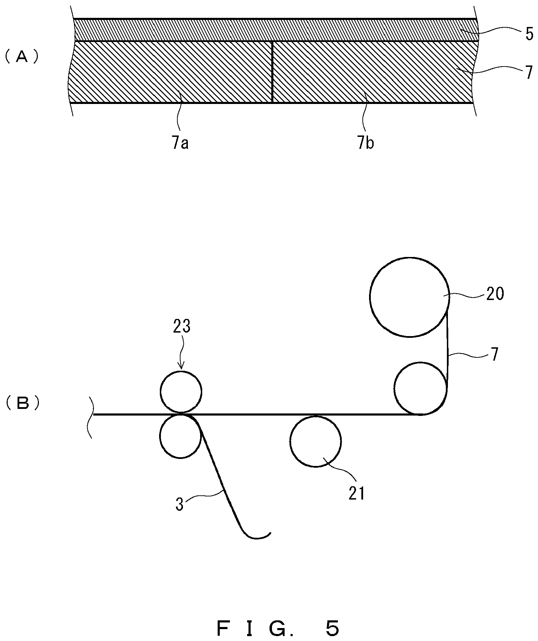

Next, a production method of the floor sheet 1 according to this embodiment for producing the floor sheet 1 described above will be explained with reference to FIG. 5.

The production method of the floor sheet 1 according to this embodiment includes:
the step of overlaying the tacky layer 5 made of an acrylic tacky material having a thickness of no less than 50 µm and less than 400 µm on the top face of the release sheet 7 having a long-sheet shape; and
the step of overlaying on the tacky layer 5, the floor sheet main body 3 made of a flame retardant rubber.

More specifically, the release sheet 7 is continuously fed from a whole release sheet material 20, and an acrylic tacky material is applied onto one face of the release sheet 7 using a tacky material application roll 21 such that the tacky layer 5 is formed. It is to be noted that the application of the acrylic tacky material may be carried out by using, for example, a roll coater, or the like.

After the application of the acrylic tacky material, the floor sheet main body 3 continuously fed from a whole floor sheet main body material (not shown in the figure) is attached to the tacky layer 5. It is to be noted that the attaching may be executed using for example, a pair of holding rolls 23, or the like.

It is to be noted that the dividing line 9 of the release sheet 7 may be formed at any time point, without any particular limitation. In other words, a whole release sheet material 20 having the dividing line 9 formed beforehand can be also used. Alternatively, the dividing line 9 may be formed in the release sheet 7 before the application of the acrylic tacky material. For example, a cutter or the like may be arranged immediately before (i.e., upstream of) the tacky material application roll 21 shown in FIG. 5B. Otherwise, the dividing line 9 may be formed in the release sheet 7 after the application of the acrylic tacky material and before attaching the floor sheet main body 3. Also, it is acceptable that the dividing line 9 is formed in the release sheet 7 after attaching the floor sheet main body 3. Further, it is also possible that two whole release sheet materials are provided so as to allow two edges of the release sheets fed from the two whole release sheet materials are abutted, whereby these edges form the dividing line 9. For example, an acrylic tacky material may be applied to the release sheets 7 fed from each whole release sheet material, and then the release sheets 7 may be attached to the floor sheet main body 3 so as to allow the edges of a pair of the release sheets 7 abutted.

Also, after the application of the acrylic tacky material to the release sheets 7, and before the attaching of the same to the floor sheet main body 3, the acrylic tacky material may be preliminarily dried. Specifically, a heater may be provided downstream a tacky material application roll 21 and upstream a holding roll 23 to heat the applied acrylic tacky material, thereby drying to some extent, and thereafter, the release sheets 7 may be attached to the floor sheet main body 3.

### Advantages

Since this embodiment is constituted as in the foregoing, the following advantages are achieved.

The floor sheet 1 according to this embodiment can be laid through pasting onto the floor face of a railway vehicle via the tacky layer 5 provided directly or indirectly on the back face of the floor sheet main body 3. Thus, as compared with the case where a conventional solvent borne adhesive is used, the laying operation can be extremely easily and rapidly carried out. In particular, since the tacky layer 5 is made of an acrylic tacky material, the floor sheet can be laid on the floor face with a sufficient strength (cohesive force) even though the thickness of the tacky layer is no less than 50 µm and less than 400 µm. In addition, since the tacky layer 5 is made of the acrylic tacky material, an advantage of superior durability can be achieved, as compared with the tacky layer constituted with a conventional nonvulcanizable butyl rubber composition.

In addition, since the tacky layer 5 has the thickness described above, the amount of the acrylic tacky material used can be smaller. Thus, the product cost can be reduced, and the total weight of the floor sheet 1 can be minimized, leading to an improvement of the handleability.

Moreover, since the floor sheet 1 is pasted via the tacky layer 5, even when detachment of the floor sheet 1 is required, the detachment manipulation can be also extremely easily and certainly carried out as compared with the case where a conventional solvent borne adhesive is used.

Furthermore, the floor sheet main body 3 is formed from the flame retardant rubber composition, and the flame retardant rubber composition contains the inorganic fire retardant in an amount of no less than 50 parts by weight and less than 90 parts by weight with respect to 100 parts by weight of the rubber component; therefore, the flame retardancy can be improved while maintaining rubber performances of the floor sheet main body 3.

Moreover, since the floor sheet 1 includes the release sheet 7 overlaid on the back face of the tacky layer 5, handleability is improved owing to the tacky layer 5 not being exposed to the top face. In addition, the laying operation (operation for construction of the floor structure) can be readily carried out by detaching the release sheet 7 in the laying operation (in the construction of the floor structure).

In addition, since the release sheet 7 has a a dividing line 9 for dividing along the longitudinal direction, the construction method of the floor structure as described above can be executed, whereby the laying operation of the floor sheet 1 can be extremely easily and accurately can be carried out.

Additionally, since the floor structure provided with the floor sheet 1 laid thereon has a surface roughness (Ra) of the floor face (top face of the floor material 10) of no less than 1 µm and less than 100 µm, a favorable cohesive force between the tacky layer 5 and the floor face is attained, thereby enabling the floor sheet 1 to be laid with a sufficient strength.

### Other Embodiment

Although the first embodiment achieves the advantages described in the foregoing due to having the aforementioned constitution, the present invention is not limit thereto, and any appropriate alteration, modification and the like may be made without departing from the spirit intended according to the present invention.

More specifically, in the first embodiment, the floor structure is constructed using the floor sheet 1 having the release sheet 7; however, the floor structure according to the present invention is not limited to be thus constructed one using the floor sheet 1 having the release sheet 7, and the floor structure may be constructed using, for example, a tacky sheet for floor faces of vehicles 30 as shown in FIG. 6A.

The tacky sheet for floor faces of vehicles 30 shown in FIG. 6A includes: a long tacky layer 5 which is made of an acrylic tacky material and has a thickness of no less than 50 µm and no greater than 400 µm; and a pair of release layers 7 and 31 each overlaid on both two faces of the tacky layer 5.

The construction method in which the tacky sheet for floor faces of vehicles 30 is used includes: the step of peeling off the release layer 7 among the pair of release layers 7 and 31; the step of attaching onto the floor face of the vehicle, the face of the tacky layer 5 from which the release layer 7 was peeled off (see, FIG. 6B); the step of peeling off the remaining release layer 31 from the tacky sheet for floor faces of vehicles 30 thus attached; and the step of overlaying the floor sheet main body made of a flame retardant rubber 3 onto the tacky layer 5 exposed through peeling off the release layer 31 (see, FIG. 6C). It is to be noted that in regard to FIG. 6, detailed descriptions of portions/parts having a similar constitution to those in the first embodiment will be omitted through designating the identical reference number/symbol.

Note that in the tacky sheet for floor faces of vehicles 30 shown in FIG. 6A, one or both of the pair of release layers 7 and 31 may have a dividing line for dividing along the longitudinal direction, as in the first embodiment. Thus, in the construction method described above, when the tacky sheet for floor faces of vehicles is attached on the floor face, tacky sheet for floor faces of vehicles 30 is placed on the floor face of the vehicle such that the release layer having the dividing line is brought into contact with the surface of the floor material. A part of the release layer is peeled off while the release sheet of the tacky sheet for floor faces of vehicles thus placed is divided along the dividing line, and a part of the tacky layer exposed through peeling off is attached onto the floor face of the vehicle. Then, from the tacky sheet for floor faces of vehicles attached on the floor face with the part of the tacky layer, the remaining release layer is peeled off, whereby a part of the tacky layer exposed through peeling off can be attached onto the floor face of the vehicle. In addition, upon attaching of the floor sheet main body onto the tacky layer, a part of the release layer is peeled off while the release layer remaining on the top face of the tacky sheet for floor faces of vehicles thus attached on the floor face is divided along the dividing line, and the floor sheet main body is attached onto the part of the tacky layer exposed through peeling off. Then, from the tacky sheet for floor faces of vehicles having a part of the floor sheet main body thereof being attached, the remaining release layer is peeled off, thereby enabling the floor sheet main body to be attached onto the part of the tacky layer exposed through peeling off.

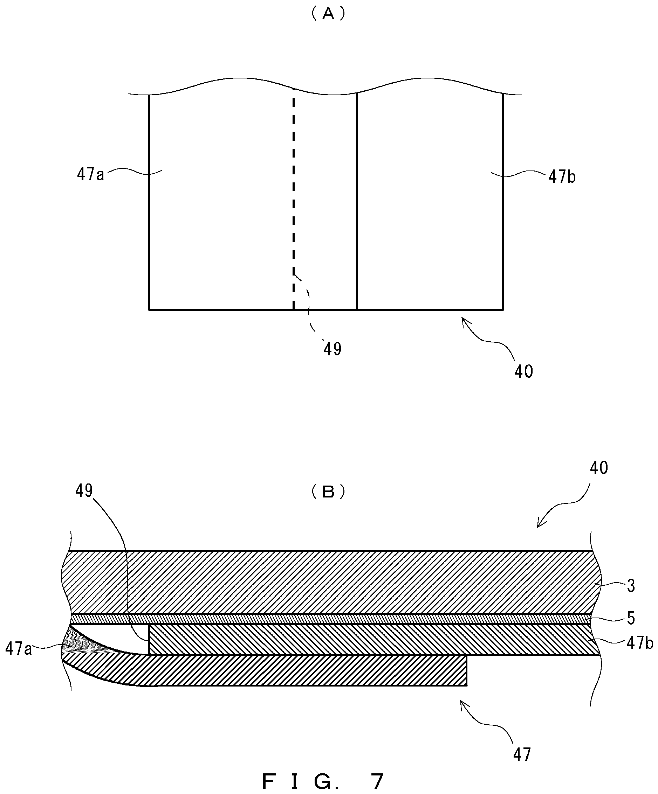

Also, in a case where a floor sheet having a peelable layer is used, providing the peelable layer with the dividing line is not requisite. Furthermore, also in a case where the peelable layer has the dividing line, the dividing line is not limited to the mode exemplified in the first embodiment, and for example, a floor sheet 40 provided with a peelable layer 47 having a dividing line 49 as shown in FIG. 7 is also acceptable.

The peelable layer 47 shown in FIG. 7 is composed of a pair of release sheet pieces 47a and 47b, and one lateral portion of one release sheet piece 47a is provided so as to overlap with the back face of the lateral portion of another release sheet piece 47b. Thus, when the one release sheet piece 47a is peeled off, the tacky layer 5 on the external side (the side where the one release sheet piece 47a was present) than an edge 49 of the other release sheet piece 47b will be exposed. In other words, the edge of the other release sheet piece 47b configures the dividing line 49. It is to be noted that in regard to the floor sheet 40 shown in FIG. 7, detailed descriptions of portions/parts having a similar constitution to those in the first embodiment will be omitted through designating the identical reference number/symbol.

Moreover, in the embodiments described above, the tacky layer 5 provided over the entire surface of the back face of the floor sheet main body 3 is explained, but the present invention is not limited thereto, and a constitution in which the tacky layer 5 is provided on only a part of the back face of the floor sheet main body 3 (for example, both lateral portions) may be also adopted. However, constitutions in which the tacky layer 5 is provided directly or indirectly over the entire surface of the back face of the floor sheet main body 3 as in the embodiments described above are preferred in the present invention, thereby leading to an advantage that partial rising and the like of the laid floor sheet can be accurately prevented.

### EXAMPLES

Hereinafter, the present invention will be described in more detail by way of Examples. It is to be noted that the present invention is not limited to the following Examples.

### Examples 1 to 3

First, a composition of a certain formulation was subjected to kneading processing using a banbury mixer and an open roll. Next, the kneaded composition was subjected to rolling processing using a calendar roll to obtain a long sheet-form matter, which was then subjected to vulcanizing processing using a continuous vulcanizing apparatus (Rotopress) at 160 °C for 15 min to produce a floor sheet main body having a width of 1 m, a length of 10 m and a thickness of 3 mm.

The aforementioned certain formulation is as in the following:
SBR (styrene-butadiene rubber; trade name "JSR 1502", manufactured by JSR Corporation): 90 parts by weight;
High styrene rubber (trade name "JSR 0061", manufactured by JSR Corporation): 10 parts by weight;
butyl rubber (trade name "Butyl 268", manufactured by Japan Butyl Co., Ltd.): 5 parts by weight;
clay (trade name "Dixie Clay", manufactured by R.T. Vanderbilt Company, Inc.): 125 parts by weight;
calcium carbonate (trade name "Jyutan", manufactured by Maruo Calcium Co., Ltd.): 50 parts by weight;
aluminum hydroxide (trade name "HIGILITE H-42M", manufactured by Showa Denko K.K.): 80 parts by weight;
antimony trioxide (trade name "FIRE CUT AT3", manufactured by Suzuhiro Chemical Co., Ltd.): 5 parts by weight;
chlorinated paraffin (trade name "EMPARA 70F", manufactured by Ajinomoto Fine-Techno Co., Inc.): 8 parts by weight;
anti-aging agent ("Nocrac 224", manufactured by Ouchi Shinko Chemical Industrial Co., Ltd.): 4 parts by weight;
tackifier (aliphatic hydrocarbon resin; trade name "Quinton A-100", manufactured by Nippon ZEON Co., Ltd.): 5 parts by weight;
diethylene glycol (trade name "Diethylene glycol", manufactured by Mitsubishi Chemical Corporation): 3 parts by weight;
silane coupling agent (trade name "Si-69", manufactured by Degussa Japan Co., Ltd.): 1 part by weight;
zinc oxide (trade name "Zinc oxide 3 kinds G", manufactured by HakusuiTech Co., Ltd.): 5 parts by weight;
stearic acid (trade name "Beads stearic acid Tsubaki", manufactured by NOF Corporation): 2 parts by weight;
titanium oxide (trade name "TIPAQUE CR-60", manufactured by Ishihara Sangyo Kaisha, Ltd.): 10 parts by weight;
sulfur (trade name "Oil sulfur", manufactured by Hosokawa Chemical Industry Co., Ltd.): 6 parts by weight; and
vulcanization accelerator (trade name "Nocceler NS-P", manufactured by Ouchi Shinko Chemical Industrial Co., Ltd.): 1.5 parts by weight.

An acrylic tacky material was applied onto the floor sheet main body to form a tacky layer. The acrylic tacky material employed was a mixture prepared by mixing 100 parts by weight of trade name "SK-Dyne 1717DT" manufactured by Soken Chemical & Engineering Co., Ltd., with 1 part by weight of trade name "L-45E" manufactured by Soken Chemical & Engineering Co., Ltd., as a hardening agent (isocyanate type crosslinking agent).

In this process, the coating thickness of the acrylic tacky material was: 100 µm in Example 1; 150 µm in Example 2; and 200 µm in Example 3. It is to be noted that the thickness of the tacky layer would have been somewhat reduced as compared with the coating thickness through drying of the acrylic tacky material after the application.

The tacky layers formed as described above were attached onto a floor face to obtain floor structures of Examples 1 to 3.

### Comparative Example 1

A floor structure of Comparative Example 1 was obtained by a similar procedure to Example 1 except that the coating thickness of the acrylic tacky material was 50 µm. Note that the thickness of the tacky layer after drying was less than 50 µm in Comparative Example 1.

### Comparative Examples 2 and 3

Floor structures of Comparative Examples 2 and 3 were obtained by: forming a tacky layer through applying a butyl rubber-based tacky material onto the floor sheet main body similar to that of Example 1; and then attaching the tacky layer onto the floor face. Note that the coating thickness of the tacky material was 150 µm in Comparative Example 2, and 1,000 µm in Comparative Example 3.

The formulation used in preparing the butyl rubber-based tacky material for use in Comparative Examples 2 and 3 was as in the following:
butyl rubber (trade name "JSR BUTYL 065", manufactured by JSR Corporation): 100 parts by weight;
clay (trade name "Clay" (inorganic filler), manufactured by Takehara Kagaku Kogyo Co., Ltd.): 80 parts by weight;
silica (trade name "TOKUSIL GU" (reinforcing filler), manufactured by Tokuyama Soda Co., Ltd.): 30 parts by weight;
polybutene 1 (trade name "Polybutene HV-300", manufactured by Nippon Oil Corporation): 70 parts by weight;
polybutene 2 (trade name "Polybutene HV-1900", manufactured by Nippon Oil Corporation): 30 parts by weight;
aliphatic hydrocarbon resin (trade name "Quinton A-100" (tackifier), manufactured by Nippon ZEON Co., Ltd.): 24 parts by weight;
naphthene-based mineral oil (trade name "Process oil NR-26" (softening agent), manufactured by Idemitsu Kosan Co., Ltd.): 15 parts by weight;
chlorinated paraffin (trade name "EMPARA 70F", manufactured by Ajinomoto Fine-Techno Co., Inc.): 8 parts by weight; and
aluminum hydroxide (trade name "HIGILITE H-42M", manufactured by Showa Denko K.K.): 30 parts by weight.

### Detachment Test

Using a stainless steel material, a urethane type base and an epoxy type base, respectively as the floor face on which the tacky layer was attached, a cohesive force was measured: immediately after the attaching; after heat aging; after deterioration at a high temperature and a high humidity; and after immersion in water. The results are shown in Table 1. It is to be noted that the cohesive force was determined in accordance with the test method defined in JIS K6854-1 "Adhesives-Determination of peel strength of bonded assemblies, Part 1: 90° peel". The peeling speed was 50 mm/min. The measurement was repeated three times, and the average of the three measurements was decided as the cohesive force.

Note that the term "after heat aging" as referred to means that the cohesive force was determined after subjecting the sample to a condition involving a temperature of 70 °C for 168 hrs following the attaching. The term "after deterioration at high temperature and high humidity" as referred to means that the cohesive force was determined after subjecting the sample to a condition involving a temperature of 65 °C and a humidity of 90% for 168 hrs following the attaching. The term "after immersion in water" as referred to means that the cohesive force was determined after immersing the sample in water (tap water) for 168 hrs.

**Table 1**

| | Example 1 | Example 2 | Example 3 | Comparative Example 1 | Comparative Example 2 | Comparative Example 3 |
|---|---|---|---|---|---|---|
| SUS | | | | | | |
| after attaching | 55 | 57 | 60 | 20 | 12 | 28 |
| | A | A | A | C | C | A |
| after heat aging | 60 | 62 | 65 | 25 | 8 | 15 |
| | A | A | A | C | C | C |
| after deterioration at high temperature and high humidity | 65 | 68 | 69 | 23 | 5 | 12 |
| | A | A | A | C | C | C |
| after immersion in water | 54 | 60 | 61 | 18 | 15 | 40 |
| | A | A | A | C | C | A |
| Urethane | | | | | | |
| after attaching | 40 | 42 | 42 | 18 | 7 | 31 |
| | A | A | A | C | C | A |
| after heat aging | 45 | 44 | 43 | 22 | 5 | 10 |
| | A | A | A | C | C | C |
| after deterioration at high temperature and high humidity | 42 | 42 | 44 | 23 | 10 | 9 |
| | A | A | A | C | C | C |
| after immersion in water | 47 | 46 | 44 | 20 | 11 | 38 |
| | A | A | A | C | C | A |
| Epoxy | | | | | | |
| after attaching | 52 | 57 | 62 | 20 | 10 | 30 |
| | A | A | A | | C | A |
| after heat aging | 55 | 60 | 66 | 23 | 7 | 12 |
| | A | A | A | C | C | C |
| after deterioration at high temperature and high humidity | 58 | 64 | 70 | 24 | 8 | 14 |
| | A | A | A | C | C | C |
| after immersion in water | 51 | 56 | 61 | 23 | 10 | 37 |
| | A | A | A | C | C | A |

It is to be noted that in Table 1, "SUS", "Urethane" and "Epoxy" mean that the materials on which the floor sheet was pasted were a stainless steel material, a urethane-based substrate and an epoxy-based substrate, respectively. In addition, the numerical values presented in Table 1 indicate the cohesive force, represented with the unit of "N/25 mm". Further, regarding the designations "A" and "C" presented below each numerical value, "A" indicates that the tacky layer was broken upon the peeling, whereas "C" indicates that detachment at the interface was found.

### Evaluation

In Comparative Examples 1 and 2, a sufficient cohesive force was not attained. In Comparative Example 3, the cohesive force attained was inferior after the heat aging and after the deterioration at high temperature and high humidity. To the contrary, in Examples 1 to 3, the cohesive force attained was favorable under all the conditions.

### Comparative Example 4

In Comparative Example 4, a floor sheet was provided which is constituted only with the floor sheet main body obtained in Example 1. In other words, a tacky layer was not formed on the floor sheet main body.

### Combustion Test

A combustion test was conducted on each of: the floor sheets (having the tacky layer) obtained in Examples 1 and 2; the floor sheet (having the tacky layer) obtained in Comparative Example 3; and the floor sheet (floor sheet main body alone) of Comparative Example 4.

The combustion test was conducted in accordance with the test method defined in ASTM E662 to determine the amount of smoke emitted under the flaming combustion (flaming mode) and the non-flaming combustion (non-flaming mode). Specifically, the sample was placed vertically in a sealed smoke chamber. In the non-flaming combustion test, an electric heater gave radiant heat to allow for smoke emission by heating, whereas in the flaming combustion test, an electric heater and a gas burner were used to allow for combustion and smoke emission. Then, the smoke thus emitted was subjected to a measurement of the extinction coefficient based on the intensity of the transmitted light using a photoelectric tube, whereby a specific optical density (amount of smoke emitted per unit area) was determined. The amount of smoke emitted after 1.5 min and 4 min from the start of the combustion, and the maximum amount of smoke emitted within 20 min were measured. The results of the measurements are shown in Table 2.

**Table 2**

| | Example 1 | Example 2 | Comparative Example 3 | Comparative Example 4 |
|---|---|---|---|---|
| flaming mode, after 1.5 min | 22 | 20 | 18 | 26 |
| flaming mode, after 4 min | 87 | 119 | 89 | 111 |
| flaming mode, maximum value | 157 | 184 | 168 | 185 |
| non-flaming mode, after 1.5 min | 2 | 2 | 3 | 2 |
| non-flaming mode, after 4 min | 93 | 103 | 88 | 103 |
| non-flaming mode, maximum value | 281 | 295 | 252 | 295 |

Furthermore, in the combustion test, the combustion gas after 4 min from the start of the combustion with the flaming mode was collected, and the concentration of subject gases was determined using a detector tube. The subject gases involved HCN, CO, NO and NO₂, SO₂, HCl, and HF. The results of the measurements are shown in Table 3. In Table 3, ND denotes that the detection failed.

**Table 3**

| | Example 1 | Example 2 | Comparative Example 3 | Comparative Example 4 |
|---|---|---|---|---|
| HCN | ND | ND | ND | ND |
| CO | 283 | 283 | 200 | 333 |
| NO and NO₂ | ND | ND | 10 | ND |
| SO₂ | 200 | 200 | 120 | 193 |
| HCl | ND | ND | ND | ND |
| HF | ND | ND | ND | ND |

### Evaluation

As is clear from Table 2, although the floor sheets of Examples 1 and 2 had the tacky layer as compared with the floor sheet of Comparative Example 4, as a result of the combustion test, the amount of smoke emitted in Examples 1 and 2 was substantially equivalent to that in Comparative Example 4. In other words, the floor sheets of Examples 1 and 2 the smoke-emitting property was suppressed at a low level. It is to be noted that regarding rough standards of the amount of smoke emitted, United States Fire Protection Association standard NFPA code No. 130 presented the criteria values of: no greater than 100 for "after 1.5 min", and no greater than 200 "after 4 min". Also in light of these criteria, it is revealed that the smoke-emitting property in Examples 1 and 2 was significantly suppressed at a low level.

Additionally, as is clear from Table 3, the floor sheets of Examples 1 and 2 exhibited no generation of NO and NO₂, unlike Comparative Example 3, and exhibited CO generation in a lower amount than Comparative Example 4.

### Examples 4 and 5

In Example 4, a floor sheet main body was produced in a similar manner to Example 1, and a mixture prepared by adding 1 part by weight of trade name "L-55E" manufactured by VIGteQnos Co., Ltd., as the hardening agent, to 100 parts by weight of trade name "Riki-Dyne AR-2412" manufactured by VIGteQnos Co., Ltd., was used as the acrylic tacky material. The tacky layer formed on the floor sheet main body was attached onto a floor face of a stainless steel material to obtain a floor structure. Moreover, in Example 5, a floor sheet main body was produced in a similar manner to Example 1, and a mixture prepared by adding 1 part by weight of trade name "BHS-8515" manufactured by Toyo Ink Co., Ltd., as the hardening agent, to 100 parts by weight of trade name "BPS-5375" manufactured by Toyo Ink Co., Ltd., was used as the acrylic tacky material. The tacky layer formed on the floor sheet main body was attached onto a floor face of a stainless material to obtain a floor structure. Note that in Examples 4 and 5, the coating thickness of the acrylic tacky material was 60 µm.

### Detachment Test

In regard to Examples 4 and 5, a cohesive force was measured: immediately after the attaching of the tacky layer; after heat aging; after deterioration at a high temperature and a high humidity; and after immersion in water. The results are shown in Table 4. It is to be noted that determination of the cohesive force was carried out in accordance with the test method defined in JIS K6854-1 "Adhesives-Determination of peel strength of bonded assemblies, Part 1: 90° peel". The peeling speed was 50 mm/min. The measurement was repeated three times, and the average of the three measurements was decided as the cohesive force. Note that the term "after heat aging" as referred to means that the cohesive force was determined after subjecting the sample to a condition involving a temperature of 70 °C for 168 hrs following the attaching. The term "after deterioration at high temperature and high humidity" as referred to means that the cohesive force was determined after subjecting the sample to a condition involving a temperature of 65 °C and a humidity of 90% for 96 hrs following the attaching. The term "after immersion in water" as referred to means that the cohesive force was determined after immersing the sample in water (tap water) for 96 hrs.

**Table 4**

| Floor face | Condition | Example 4 | Example 5 |
|---|---|---|---|
| SUS | after attaching | 21 | 34 |
| | | A | A |
| | after heat aging | 21 | 24 |
| | | A | A |
| | after deterioration at high temperature and high humidity | 23 | 24 |
| | | A | A |
| | after immersion in water | 38 | 41 |
| | | A | A |

It is to be noted that in Table 4, the numerical values presented in Table 1 indicate the cohesive force, represented with the unit of "N/25 mm". Further, the designation "A" presented below each numerical value means that the tacky layer was broken upon the peeling.

### Evaluation

In Examples 4 and 5, the cohesive force attained was favorable under all the conditions.

### Examples 6 to 9

Floor sheets of Examples 6 to 9 (sheets consisting of the floor sheet main body and the tacky layer) were produced by overlaying the release sheet on the floor sheet obtained in Example 2.

In Examples 6 to 9, the release sheet employed was as in the following.

In Example 6, trade name "SL-70S" manufactured by Sumika-Kakoushi Co., Ltd., (release paper) was used.

In Example 7, trade name "PET75 x 1-C" manufactured by NIPPA Corporation (polyethylene terephthalate release film) was used.

In Example 8, trade name "SL72-R" manufactured by Sumika-Kakoushi Co., Ltd., (creped paper) was used.

In Example 9, trade name "100RL-02" manufactured by Oji Specialty Paper Co., Ltd., (polyethylene release film) was used as the release sheet.

Characteristic features of the release sheets of Examples 6 to 9 were as in the following.

The release sheet of Example 6 had an elongation at break of 6%, an elastic recovery percentage of elongation of 48%, and a sheet thickness of 120 µm.

The release sheet of Example 7 had an elongation at break of 2%, an elastic recovery percentage of elongation of 87%, and a sheet thickness of 75 µm.

The release sheet of Example 8 had an elongation at break of 49%, an elastic recovery percentage of elongation of 80%, and a sheet thickness (measurement obtained using a thickness meter) of 320 µm.

The release sheet of Example 9 had an elongation at break of 320%, an elastic recovery percentage of elongation of 78%, and a sheet thickness of 100 µm.

In these regards, the elongation percentage at break was determined in accordance with JIS K7161, and the elastic recovery percentage of elongation was determined in accordance with JIS L1096.

### Winding Test

After the floor sheets of Examples 6 to 9 were each wound around a 3-inch paper tube, the floor sheets were spread back, and generation of a wrinkle and break, and tunnel was observed on the release sheets. The results are shown in Table 5. It is to be noted that the "tunnel" as referred to means a gap generated between the release sheet and the tacky layer, indicating a state of a part of the release sheet being risen from the tacky layer. Also, A, B and C in Table 5 indicate as to whether or not the wrinkle and the like were generated: "A" indicating no generation; "C" indicating generation; and "B" indicating slight generation.

**Table 5**

| | Example 6 | Example 7 | Example 8 | Example 9 |
|---|---|---|---|---|
| elongation percentage at break (%) | 6 | 2 | 49 | 320 |
| elastic recovery percentage of elongation (%) | 48 | 87 | 80 | 78 |
| wrinkle | C | B | A | A |
| break | C | A | A | A |
| tunnel | C | C | A | A |

### Evaluation

The floor sheet of Example 6 exhibited generation of all the wrinkle, break and tunnel. The floor sheet of Example 7 exhibited no generation of the break, some generation of the wrinkle, and generation of the tunnel. The floor sheets of Examples 8 and 9 exhibited no generation of the wrinkle, break and tunnel.

### Examples 10 and 11

Floor sheets of Examples 10 and 11 were obtained by forming the tacky layer through applying an acrylic tacky material onto the floor sheet main body obtained in Example 1. In Example 10, the acrylic tacky material prepared by adding 1.4 parts by weight of trade name "L-45" manufactured by Soken Chemical & Engineering Co., Ltd., as the hardening agent (isocyanate type crosslinking agent) to 100 parts by weight of trade name "SK-Dyne 1700" manufactured by Soken Chemical & Engineering Co., Ltd., was used. In Example 11, the acrylic tacky material prepared by adding 1.5 parts by weight of the same "L-45" to 100 parts by weight of trade name "SK-Dyne 1604N" manufactured by Soken Chemical & Engineering Co., Ltd., was used. Note that the floor sheets of Examples 10 and 11 had a thickness of 3 mm.

### Viscoelastic Characteristic of Tacky Layer

The the shear storage modulus (G', unit: Pa) and the loss tangent (tan δ) of the acrylic tacky materials forming the tacky layers in Examples 1, 10 and 11 were measured under two conditions of: (1) 10 Hz, 40 °C; and (2) 10 Hz, 60 °C using a viscoelastic spectrometer (trade name "VISCOELASTIC SPECTROMETER TYPE VES-F3" manufactured by Iwamoto Seisakusho Co., Ltd.,), in accordance with a temperature dispersion measurement of a common tensile method. The results of the measurements are shown in Table 6. Note that in the measurement, the sample diameter was 8 mm, and the strain fell within the range of 0.01 to 0.5% to meet the acrylic tacky materials used in each Example such that a sufficient response was obtained.

**Table 6**

| | | Example 1 | Example 10 | Example 11 |
|---|---|---|---|---|
| (1) 10 Hz/40 °C | shear storage modulus (G') | 5.98 x 10⁴ | 6.51 x 10⁴ | 2.09 x 10⁵ |
| | loss tangent (tan δ) | 1.01 | 0.89 | 0.40 |
| (2) 10 Hz/60 °C | shear storage modulus (G') | 4.01 x 10⁴ | 5.03 x 10⁴ | 1.24 x 10⁴ |
| | loss tangent (tan 5) | 0.91 | 0.82 | 0.42 |

### Detachment Test

Using a stainless steel material and a urethane type substrate, respectively, as the floor faces to be attached, a cohesive force immediately after the attaching was measured with varying amount of the tacky layer overlaid on the floor sheets of Examples 1, 10 and 11. The results are shown in Table 7. It is to be noted that the cohesive force was determined in accordance with the test method defined in JIS K6854-1 "Adhesives-Determination of peel strength of bonded assemblies, Part 1: 90° peel". The peeling speed was 50 mm/min. The measurement was repeated three times, and the average of the three measurements was decided as the cohesive force.

**Table 7**

| Floor face | Amount of tacky layer coated | Example 1 | Example 10 | Example 11 |
|---|---|---|---|---|
| SUS | 25 g/m² | 45 | 28 | 30 |
| | 50 g/m² | 48 | 38 | 40 |
| | 75 g/m² | 50 | 41 | 44 |
| | 100 g/m² | 55 | 40 | 45 |
| | 130 g/m² | 55 | 42 | 47 |
| | 175 g/m² | 58 | 43 | 48 |
| | 200 g/m² | 57 | 45 | 47 |
| Urethane | 25 g/m² | 19 | 15 | 13 |
| | 50 g/m² | 38 | 27 | 29 |
| | 75 g/m² | 42 | 32 | 40 |
| | 100 g/m² | 40 | 35 | 42 |
| | 130 g/m² | 42 | 38 | 45 |
| | 175 g/m² | 42 | 37 | 47 |
| | 200 g/m² | 41 | 38 | 46 |

It is to be noted that in Table 7, "SUS" and "Urethane" mean that the materials on which the floor sheet was pasted were a stainless steel material and a urethane-based substrate, respectively. In addition, the numerical values presented in Table 1 indicate the cohesive force, represented with the unit of "N/25 mm".

### Evaluation

In Examples 1, 10 and 11, although the cohesive force to the urethane-based substrate was less than the cohesive force to the stainless steel material, the floor sheet in which the amount overlaid was no less than 50 g/m² exhibited a sufficient cohesive force (no less than 20 N/25 mm) also to the urethane-based substrate.

### Detachment Under Shear Test

Using a stainless steel material and a urethane type substrate, respectively as the floor face to be attached, adhesive strength under shear immediately after the attaching was measured with varying amount of tacky layer overlaid on the floor sheets of Examples 1, 10 and 11. The results are shown in Table 8. It is to be noted that the adhesive strength under shear was determined in accordance with the test method defined in JIS K6854-2 "Adhesives-Determination of peel strength of bonded assemblies, Part 2: 180° peel" after 24 hrs from pressure bonding with a hand roller at 2 kgf, of the floor sheet having a tacky layer area of 25 mm x 25 mm which had been attached onto the floor face. In this procedure, the peeling speed was 2 mm/min. The measurement was repeated three times, and the average of the three measurements was decided as the adhesive strength under shear.

Additionally, with respect to the case in which the amount of the tacky layer overlaid was 100 g/m² in the floor sheets of Examples 1, 10 and 11, the adhesive strengths under shear after heat aging, after deterioration at high temperature and high humidity, after immersion in water and after temperature cycling were determined. The results are shown in Table 9. The adhesive strength under shear after heat aging as referred to means the adhesive strength under shear determined after subjecting the sample to a condition involving a temperature of 60 °C for 200 to 1,000 hrs following the attaching. The adhesive strength under shear after deterioration at high temperature and high humidity as referred to means the adhesive strength under shear determined after subjecting the sample to a condition involving a temperature of 65 °C and a humidity of 90% for 200 to 1,000 hrs following the attaching. The adhesive strength under shear after immersion in water means the adhesive strength under shear determined after immersing the sample in water at a normal temperature (tap water) for 168 hrs. The adhesive strength under shear after temperature cycling as referred to means the adhesive strength under shear determined after subjecting the sample to repeating 10 cycles of the temperature alteration between -10 °C and 60 °C.

**Table 8**

| Floor face | Amount of tacky layer coated | Example 1 | Example 10 | Example 11 |
|---|---|---|---|---|
| SUS | 25 g/m² | 0.02 | 0.12 | 0.14 |
| | 50 g/m² | 0.04 | 0.17 | 0.19 |
| | 75 g/m² | 0.05 | 0.22 | 0.24 |
| | 100 g/m² | 0.08 | 0.23 | 0.24 |
| | 130 g/m² | 0.08 | 0.23 | 0.29 |
| | 175 g/m² | 0.15 | 0.26 | 0.29 |
| Urethane | 25 g/m² | 0.04 | 0.14 | 0.14 |
| | 50 g/m² | 0.06 | 0.19 | 0.21 |
| | 75 g/m² | 0.10 | 0.22 | 0.25 |
| | 100 g/m² | 0.10 | 0.23 | 0.26 |
| | 130 g/m² | 0.13 | 0.24 | 0.29 |
| | 175 g/m² | 0.15 | 0.27 | 0.29 |
| Epoxy | 130 g/m² | 0.11 | 0.22 | 0.26 |
| Aluminum | 130 g/m² | 0.13 | 0.24 | 0.29 |

**Table 9**

| Floor face | Condition | | Example 1 | Example 10 | Example 11 |
|---|---|---|---|---|---|
| SUS | after heat aging | 200 hrs | 170 | 140 | 150 |
| | | 500 hrs | 180 | 180 | 175 |
| | | 1000 hrs | 240 | 220 | 215 |
| | after deterioration at high temperature and high humidity | 200 hrs | 160 | 170 | 155 |
| | | 500 hrs | 245 | 225 | 230 |
| | | 1000 hrs | 260 | 240 | 250 |
| | after immersion in water | 168 hrs | 100 | 95 | 105 |
| | after temperature cycling | 10 cycles | 120 | 115 | 125 |
| Urethane | after heat aging | 200 hrs | 180 | 165 | 170 |
| | | 500 hrs | 200 | 210 | 220 |
| | | 1000 hrs | 235 | 240 | 240 |
| | after deterioration at high temperature and high humidity | 200 hrs | 150 | 150 | 145 |
| | | 500 hrs | 220 | 200 | 210 |
| | | 1000 hrs | 265 | 210 | 205 |
| | after immersion in water | 168 hrs | 105 | 95 | 90 |
| | after temperature cycling | 10 cycles | 115 | 115 | 120 |

It is to be noted that in Tables 8 and 9, "SUS", "Urethane", "Epoxy" and "Aluminum" mean that the materials on which the floor sheet was pasted were a stainless steel material, a urethane-based substrate, an epoxy-based substrate and an aluminum material, respectively. In addition, the numerical values presented in Table 8 indicate the adhesive strength under shear, represented with the unit of "N/mm²". Whereas, the numerical values presented in Table 9 indicate the ratio in terms of percentage of each adhesive strength under shear to the adhesive strength under shear in each usual state as shown in Table 8, assuming that the amount of the tacky layer overlaid was 100 g/m².

### Evaluation

The adhesive strength under shear of the floor sheets of Examples 10 and 11 was grater than that in Example 1. Particularly, when the amount overlaid was no less than 50 g/m² in Examples 10 and 11, the adhesive strength under shear as high as no less than 0.15 N/mm² was attained. In addition, according to Examples 1, 10 and 11, the adhesive strength under shear was maintained even after subjecting to the heat aging, the deterioration at high temperature and high humidity, the immersion in water, and the temperature cycling.

### Floor Sheet Positioning Retentivity Test

Using a stainless steel material and an aluminum material, respectively, as the floor faces to be attached, a positional deviation of the floor sheet upon application of a given shear load was determined with varying amount of the tacky layer overlaid on the floor sheets of Examples 1, 10 and 11. The results are shown in Table 10. It is to be noted that for the determination of the positional deviation of the floor sheet, the floor sheet having a tacky layer area with: width of 25 mm x length of 30 mm, and the floor face were each heated in an oven with the setting of 60 °C, which were removed from the oven. After attaching, the sample was again placed into the oven, and pressure bonding with a hand roller at 2 kgf. Thereto was applied a load of 5.67 N in the width direction of the floor sheet, and the positional deviation after leaving to stand for 1 hour was measured. The measurement was repeated three times, and the average of the three measurements was calculated, which average was decided as the positional deviation. This floor sheet positioning retentivity test is designed for evaluating the positioning retentivity of the floor sheet, on the assumption of displacement resulting from rising of the floor sheet at "R portion" (rising portion) in a case where the floor sheet for vehicles was pasted so as to cover from the floor face over the side walls of the vehicle.

**Table 10**

| Floor face | Amount of tacky layer coated | Example 1 | Example 10 | Example 11 |
|---|---|---|---|---|
| SUS | 25 g/m² | 12 | 0.5 | 0 |
| | 50 g/m² | 15 | 0.5 | 0 |
| | 75 g/m² | exceeding 25 | 0.6 | 0 |
| | 100 g/m² | exceeding 25 | 0.8 | 0 |
| | 130 g/m² | exceeding 25 | 0.8 | 0.5 |
| | 175 g/m² | exceeding 25 | 1.0 | 0.75 |
| | 200 g/m² | exceeding 25 | 3.5 | 2.5 |
| Aluminum | 25 g/m² | 8 | 0 | 0 |
| | 50 g/m² | 10 | 0 | 0 |
| | 75 g/m² | 15 | 0 | 0 |
| | 100 g/m² | exceeding 25 | 0.5 | 0 |
| | 130 g/m² | exceeding 25 | 0.5 | 0 |
| | 175 g/m² | exceeding 25 | 1.0 | 0.5 |
| | 200 g/m² | exceeding 25 | 3.0 | 2.0 |

It is to be noted that in Table 10, "SUS" and "Aluminum" mean that the materials on which the floor sheet was pasted were a stainless steel material and an aluminum material, respectively. In addition, the numerical values presented in Table 10 indicate the positional deviation, represented with the unit of "mm". In addition, the expression "exceeding 25" means that the tacky layer of the floor sheet was completely detached resulting from the deviation.

### Evaluation

In Example 1, the positional deviation was greater as compared with Examples 10 and 11. The tacky layer was completely detached when the amount of the tacky layer overlaid was no less than 75 g/m² in the case where the stainless steel material was used, whereas the tacky layer was completely detached when the amount of the tacky layer overlaid was no less than 100 g/m² in the case where the aluminum material was used. In Examples 10 and 11, occurrence of the deviation was less frequent, indicating superior positioning retentivity exhibited. Particularly, when the amount of the tacky layer overlaid was no greater than 175 g/m², the occurrence of the deviation was effectively inhibited.

### Rising Test

Using a stainless steel material and an aluminum material having a 90-degree bent face, respectively, as the floor faces to be attached, a rising height was determined with varying amount of the tacky layer overlaid on the floor sheets of Examples 1, 10 and 11. The results are shown in Tables 11 and 12. It is to be noted that for the determination of the rising height, the floor sheet was pasted along the 90-degree bent face of the floor material with a curvature radius of 20 mm, and the sample was left to stand for 24 hrs at a normal temperature in Example 1, whereas the sample was: left to stand for 24 hrs at a normal temperature; left to stand at 60 °C for 24 hrs; or subjected to repeating 10 cycles of the temperature alteration between -10 °C and 60 °C in Examples 10 and 11. Then, the rising height from the bottom face of the floor material was measured. This rising test is designed, similarly to the floor sheet positioning retentivity test, for evaluating the quality on the assumption of rising of the floor sheet at "R portion" in a case where the floor sheet for vehicles was pasted so as to cover from the floor face over the side walls of the vehicle.

**Table 11**

| Floor face | Condition | Amount of tacky layer coated | Example 1 | Example 10 | Example 11 |
|---|---|---|---|---|---|
| | normal temperature | 25 g/m² | 2.01 | 0.15 | 0.14 |
| | | 50 g/m² | 2.21 | 0.18 | 0.14 |
| | | 75 g/m² | 3.32 | 0.18 | 0.14 |
| | | 10 g/m² | 3.55 | 0.20 | 0.15 |
| | | 130 g/m² | 4.31 | 0.22 | 0.18 |
| | | 175 g/m² | 5. 64 | 0.24 | 0.20 |
| | | 200 g/m² | 5.55 | 0.22 | 0.19 |
| | 60 °C | 25 g/m² | | 0.14 | 0.13 |
| | | 50 g/m² | | 0.13 | 0.15 |
| | | 75 g/m² | | 0.15 | 0.14 |
| SUS | | 100 g/m² | | 0.19 | 0.16 |
| | | 130 g/m² | | 0.21 | 0.18 |
| | | 175 g/m² | | 0.27 | 0.18 |
| | | 200 g/m² | | 0.45 | 0.55 |
| | temperature cycling | 25 g/m² | | 0.16 | 0.18 |
| | | 50 g/m² | | 0.17 | 0.17 |
| | | 75 g/m² | | 0.16 | 0.17 |
| | | 100 g/m² | | 0.17 | 0.15 |
| | | 130 g/m² | | 0.19 | 0.18 |
| | | 175 g/m² | | 0.20 | 0.16 |
| | | 200 g/m² | | 0.35 | 0.24 |

**Table 12**

| Floor face | Condition | Amount of tacky layer coated | Example 1 | Example 10 | Example 11 |
|---|---|---|---|---|---|
| | normal temperature | 25 g/m² | 1.87 | 0.14 | 0.14 |
| | | 50 g/m² | 1.89 | 0.17 | 0.15 |
| | | 75 g/m² | 2.35 | 0.17 | 0.16 |
| | | 100 g/m² | 2.67 | 0.18 | 0.15 |
| | | 130 g/m² | 3.54 | 0.22 | 0.18 |
| | | 175 g/m² | 5.14 | 0.22 | 0.19 |
| | | 200 g/m² | 5.01 | 0.24 | 0.21 |
| | 60 °C | 25 g/m² | | 0.15 | 0.16 |
| | | 50 g/m² | | 0.18 | 0.17 |
| | | 75 g/m² | | 0.20 | 0.20 |
| Aluminum | | 100 g/m² | | 0.20 | 0.20 |
| | | 130 g/m² | | 0.24 | 0.19 |
| | | 175 g/m² | | 0.29 | 0.21 |
| | | 200 g/m² | | 0.58 | 0.50 |
| | temperature cycling | 25 g/m² | | 0.15 | 0.13 |
| | | 50 g/m² | 0.13 | | 0.14 |
| | | 75 g/m² | | 0.1.4 | 0.15 |
| | | 100 g/m² | | 0.15 | 0.14 |
| | | 130 g/m² | | 0.15 | 0.18 |
| | | 175 g/m² | | 0.16 | 0.20 |
| | | 200 g/m² | | 0.24 | 0.21 |

It is to be noted that in Tables 11 and 12, "SUS" and "Aluminum" mean that the materials on which the floor sheet was pasted were a stainless steel material and an aluminum material, respectively. In addition, the numerical values presented in Tables 11 and 12 indicate the rising height, represented with the unit of "mm".

### Evaluation

In Example 1, the rising height was greater as compared with Examples 10 and 11. In Examples 10 and 11, the rising height was considerably reduced even in a high temperature (60 °C) environment or after subjecting to the temperature cycling. In particular, when the amount of the tacky layer overlaid was no greater than 175 g/m², it was possible to reduce the rising height to no greater than 0.3 mm (0.3 mm being the minimum rising height which can be apparently observed) even in a high temperature environment, and after subjecting to the temperature cycling temperature cycling.

### [INDUSTRIAL APPLICABILITY]

The present invention is suitably employed in, for example, floor faces of railway vehicles and the like.

### [EXPLANATION OF THE REFERENCE SYMBOLS]

- 1: floor sheet
- 3: floor sheet main body
- 5: tacky layer
- 7: release sheet (release layer)
- 7a, 7b: release sheet piece
- 9: dividing line
- 10: floor material
- 20: whole release sheet material material
- 21: tacky material application roll
- 23: holding roll
- 30: tacky sheet for floor faces of vehicles
- 31: release layer
- 40: floor sheet
- 47: peelable layer
- 47a, 47b: release sheet piece
- 49: dividing line

## Claims

1. A floor sheet (1, 40) for vehicles to be laid on a floor face of a vehicle **characterized in that**
the floor sheet (1, 40) comprises:
a floor sheet main body (3) made of a flame retardant rubber and formed to have a long-sheet shape and to have a thickness of no less than 1 mm and less than 7 mm; and
a tacky layer (5) made of an acrylic tacky material and overlaid directly or indirectly on a back face of the floor sheet main body (3) so as to have a thickness of no less than 50 µm and less than 400 µm
and that
the acrylic tacky material comprises a hardening agent.

2. The floor sheet (1, 40) for vehicles according to claim 1, wherein
the floor sheet main body (3) is formed from a flame retardant rubber composition, and
the flame retardant rubber composition comprises: a rubber component; and an inorganic fire retardant in an amount of no less than 50 parts by weight and less than 90 parts by weight with respect to 100 parts by weight of the rubber component.

3. The floor sheet (1, 40) for vehicles according to claim 2, wherein the inorganic fire retardant is aluminum hydroxide, antimony trioxide, or a combination thereof.

4. The floor sheet (1, 40) for vehicles according to claim 1, wherein the amount of the tacky layer (5) overlaid is no less than 50 g/m² and no greater than 175 g/m².

5. The floor sheet (1, 40) for vehicles according to claim 1, wherein the tacky layer (5) has: at 10 Hz and 40 °C, a shear storage modulus of no less than 6.4 x 10⁴ Pa and no greater than 2.2 x 10⁵ Pa and a loss tangent of no less than 0.35 and no greater than 0.95; or at 10 Hz and 60 °C, a shear storage modulus of no less than 4.9 x 10⁴ Pa and no greater than 1.4 x 10⁵ Pa and a loss tangent of no less than 0.40 and no greater than 0.85.

6. The floor sheet (1, 40) for vehicles according to claim 1 further comprising a release layer (7) overlaid on the back face of the tacky layer(5), wherein
the release layer (7) has an elongation percentage at break of no less than 10%as determined in accordance with JIS K6251, and an elastic recovery percentage of elongation of no less than 50% as determined in accordance with JIS L1096.

7. A floor structure of a vehicle comprising:
a floor material of the vehicle; and
the floor sheet for vehicles according to any one of claims 1 to 6 overlaid on a top face of the floor material.

8. A method for constructing a floor structure of a vehicle, comprising:
peeling off the release layer (7) from the floor sheet (1, 40) for vehicles according to claim 6; and
attaching the tacky layer (5) exposed through peeling off the release layer (7), to a floor face of the vehicle.

## Patentansprüche

1. Bodenbelag (1, 40) für Fahrzeuge zum Auslegen auf einer Bodenfläche eines Fahrzeugs, **dadurch gekennzeichnet, dass** der Bodenbelag (1, 40) aufweist:
einen Bodenbelaghauptkörper (3), der aus einem flammenhemmenden Gummi besteht und in Form einer langen Bahn und mit einer Dicke von mindestens 1 mm und weniger als 7 mm ausgebildet ist; und
einer klebrigen Schicht (5), die aus einem klebrigen Acrylmaterial besteht und direkt oder indirekt auf eine Rückseite des Bodenbelaghauptkörpers (3) derart aufgelegt ist, dass sie eine Dicke von mindestens 50 µm und weniger als 400 µm aufweist,
und dass
das klebrige Acrylmaterial ein Härtemittel aufweist.

2. Bodenbelag (1, 40) für Fahrzeuge nach Anspruch 1, bei welchem
der Bodenbelaghauptkörper (3) aus einer flammenhemmenden Gummizusammensetzung besteht, und
die flammenhemmende Gummizusammensetzung aufweist: eine Gummikomponente; und einen anorganischen Flammenhemmer in einer Menge von mindestens 50 Gewichtsanteilen und weniger als 90 Gewichtsanteilen bezogen auf 100 Gewichtsanteile der Gummikomponente.

3. Bodenbelag (1, 40) für Fahrzeuge nach Anspruch 2, bei welchem der anorganische Flammenhemmer Aluminiumhydroxid, Antimontrioxid oder eine Kombination derselben ist.

4. Bodenbelag (1, 40) für Fahrzeuge nach Anspruch 1, bei welchem die Menge der aufgelegten klebrigen Schicht (5) mindestens 50 g/m² und höchstens 175 g/m² beträgt.

5. Bodenbelag (1, 40) für Fahrzeuge nach Anspruch 1, bei welchem die klebrige Schicht (5) aufweist: bei 10 Hz und 40°C, ein Scher-Speichermodul von mindestens 6,4 x 10⁴ Pa und höchstens 2,2 x 10⁵ Pa und eine Verlusttangente von mindestens 0,35 und höchstens 0,95; oder bei 10 Hz und 60°C, ein Scher-Speichermodul von mindestens 4,9 x 10⁴ Pa und höchstens 1,4 x 10⁵ Pa und eine Verlusttangente von mindestens 0,40 und höchstens 0,85;

6. Bodenbelag (1, 40) für Fahrzeuge nach Anspruch 1, ferner mit einer auf die Rückseite der klebrigen Schicht (5) aufgelegten Trennschicht (7), wobei
die Trennschicht (7) einen gemäß JIS K6251 ermittelten Reißdehnungsprozentsatz von mindestens 10% und einen gemäß JIS L1096 ermittelten elastischen Dehnungsrückstellungsprozentsatz von weniger als 50% aufweist.

7. Bodenstruktur eines Fahrzeugs mit:
einem Bodenmaterial des Fahrzeugs; und
dem Bodenbelag für Fahrzeuge nach einem der Ansprüche 1 bis 6, der auf eine Oberseite des Bodenmaterials aufgelegt ist.

8. Verfahren zur Herstellung einer Bodenstruktur eines Fahrzeugs, mit den folgenden Schritten:
Abziehen der Trennschicht (7) von dem Bodenbelag (1, 40) für Fahrzeuge nach Anspruch 6; und
Anbringen der klebrigen Schicht (5), die durch das Abziehen der trennschicht (7) freigelegt ist, auf einer Bodenfläche des Fahrzeugs.

## Revendications

1. Tôle de plancher (1, 40) pour véhicules à poser sur une face de plancher d'un véhicule, **caractérisée en ce que** la tôle de plancher (1, 40) comprend :
un corps principal de tôle de plancher (3) constitué d'un caoutchouc retardateur de flammes et formé pour avoir une forme de tôle longue et pour avoir une épaisseur non inférieure à 1 mm et inférieure à 7 mm ; et
une couche collante (5) constituée d'un matériau collant acrylique et recouvrant directement ou indirectement une face arrière du corps principal de tôle de plancher (3) de façon à avoir une épaisseur non inférieure à 50 µm et inférieure à 400 µm
**en ce que**
le matériau collant acrylique comprend un agent de durcissement.

2. Tôle de plancher (1, 40) pour véhicules selon la revendication 1, dans laquelle
le corps principal de tôle de plancher (3) est formé à partir d'une composition de caoutchouc retardateur de flammes, et
la composition de caoutchouc retardateur de flammes comprend : un composant caoutchouc ; et un ignifuge inorganique dans une quantité non inférieure à 50 parties en poids et inférieure à 90 parties en poids par rapport à 100 parties en poids du composant caoutchouc.

3. Tôle de plancher (1, 40) pour véhicules selon la revendication 2, dans laquelle l'ignifuge inorganique est l'hydroxyde d'aluminium, le trioxyde d'antimoine ou une combinaison de ceux-ci.

4. Tôle de plancher (1, 40) pour véhicules selon la revendication 1, dans laquelle la quantité de la couche collante (5) recouvrante est non inférieure à 50 g/m² et non supérieure à 175 g/m².

5. Tôle de plancher (1, 40) pour véhicules selon la revendication 1, dans laquelle la couche collante (5) présente : à 10 Hz et 40 °C, un module de cisaillement au stockage non inférieur à 6,4 x 10⁴ Pa et non supérieur à 2,2 x 10⁵ Pa et un facteur de dissipation diélectrique non inférieur à 0,35 et non supérieur à 0,95 ; ou à 10 Hz et 60 °C, un module de cisaillement au stockage non inférieur à 4,9 x 10⁴ Pa et non supérieur à 1,4 x 10⁵ Pa et un facteur de dissipation diélectrique non inférieur à 0,40 et non supérieur à 0,85.

6. Tôle de plancher (1, 40) pour véhicules selon la revendication 1, comprenant en outre une couche antiadhésive (7) recouvrant la face arrière de la couche collante (5), dans laquelle
la couche antiadhésive (7) présente un pourcentage d'allongement à la rupture non inférieur à 10 % tel que déterminé selon la norme JIS K6251, et un pourcentage de retour élastique d'allongement non inférieur à 50 % tel que déterminé selon la norme JIS L1096.

7. Structure de plancher d'un véhicule comprenant :
un matériau de plancher du véhicule ; et
une tôle de plancher pour véhicules selon l'une quelconque des revendications 1 à 6 recouvrant une face supérieure du matériau de plancher.

8. Procédé de construction d'une structure de plancher d'un véhicule, comprenant :
le décollement de la couche antiadhésive (7) de la tôle de plancher (1, 40) pour véhicules selon la revendication 6 ; et
la fixation de la couche collante (5) exposée par le décollement de la couche antiadhésive (7), à une face de plancher du véhicule.
